# EUROPEAN PATENT APPLICATION

(11) **EP 4 675 979 A1**
(43) Date of publication of application: **07.01.2026**
(21) Application number: 24773986.5
(22) Date of filing: 14.03.2024
(51) Int. Cl.: H04L 9/40

(54) **VALIDATION INFORMATION SENDING METHOD AND APPARATUS, VALIDATION TABLE ENTRY ACQUISITION METHOD AND APPARATUS, AND DEVICE**

(30) Priority: 17.03.2023 CN 202310293070; 10.10.2023 CN 202311309136; 29.12.2023 CN 202311866029
(71) Applicant: HUAWEI TECHNOLOGIES CO., LTD., Shenzhen, Guangdong 518129 (CN)
(72) Inventor: HUANG, Mingqing, Shenzhen, Guangdong 518129 (CN); LIU, Mingxing, Shenzhen, Guangdong 518129 (CN); GENG, Nan, Shenzhen, Guangdong 518129 (CN); TAN, Zhen, Shenzhen, Guangdong 518129 (CN)
(74) Representative: Körber, Martin Hans
(86) International application number: PCT/CN2024/081566
(87) International publication number: WO 2024/193420

(57) **Abstract**

This application discloses a validation information sending method, a validation entry obtaining method, an apparatus, and a device. A first network device in a first AS serving as an origin autonomous system AS obtains validation information corresponding to the first AS and a neighbor AS corresponding to a second AS used for validation, where the neighbor AS is a previous-hop AS of the second AS in a direction from the first AS to the second AS. The first network device sends the validation information and the neighbor AS to the second AS, and the validation AS obtains a validation entry based on the validation information and the neighbor AS, and performs validation on a source address of a received service packet based on the validation entry. In other words, in this application, the first AS may send, to the validation AS, the validation information and the neighbor AS corresponding to the validation AS, and does not need to send the validation information to all ASs on a path with the first AS as an origin AS. In this way, communication overheads are reduced.

## Description

This application claims priorities to Chinese Patent Application No. 202310293070.X, filed with the China National Intellectual Property Administration on March 17, 2023 and entitled "VALIDATION INFORMATION SENDING METHOD, VALIDATION ENTRY OBTAINING METHOD, APPARATUS, AND DEVICE"; to Chinese Patent Application No. 202311309136.6, filed with the China National Intellectual Property Administration on October 10, 2023 and entitled "VALIDATION INFORMATION SENDING METHOD, VALIDATION ENTRY OBTAINING METHOD, APPARATUS, AND DEVICE"; and to Chinese Patent Application No. 2023118660293, filed with the China National Intellectual Property Administration on December 29, 2023 and entitled "VALIDATION INFORMATION SENDING METHOD, VALIDATION ENTRY OBTAINING METHOD, APPARATUS, AND DEVICE", which are incorporated herein by reference in their entireties.

### TECHNICAL FIELD

This application relates to the field of communication technologies, and in particular, to a validation information sending method, a validation entry obtaining method, an apparatus, and a device.

### BACKGROUND

Generally, after receiving a packet, a device on a network obtains a destination address of the packet and searches for a forwarding route based on the destination address. If the forwarding route is found, the device normally forwards the packet. If no forwarding route is found, the device discards the packet. Therefore, it can be learned that, when forwarding the packet, the device on the network does not care about a source address of the packet. This brings chances for source address spoofing attacks. The source address spoofing attack means that intruders construct a series of packets with forged source addresses to frequently access a device or host on which the destination address resides. This causes damages to victim hosts or devices to a specific extent even if response packets from the victim hosts or devices cannot be returned to the intruders.

To prevent source address-based network attack behavior, a source address validation scheme, for example, unicast reverse path forwarding (unicast reverse path forwarding, URPF), is proposed. In the URPF, a source address and an incoming interface of a packet are obtained, and the source address is used as a destination address, to search a forwarding table for whether an interface corresponding to the source address matches the incoming interface. If the interface does not match the incoming interface, it is considered that the source address is forged and the packet is discarded. In this manner, the URPF can effectively defend against a malicious attack behavior that modifies the source address in the network. Because the URPF depends on the forwarding table, when routes are asymmetric on the network, a packet may be discarded incorrectly. Based on this, a distributed source address validation (distributed source address validation, DSAV) scheme is proposed. When the scheme is performed, a device configured for validation of a source address establishes a source address validation (source address validation, SAV) table that records the source address and a corresponding valid incoming interface. If an incoming interface of a packet is different from a valid incoming interface corresponding to a source address of the packet, it is considered that the source address of the packet is a forged and the packet is discarded. However, when source address validation is performed in different autonomous systems (autonomous systems, ASs), a large quantity of ASs may be involved, leading to large calculation overheads and communication overheads.

### SUMMARY

This application provides a validation information sending method, a validation entry obtaining method, an apparatus, and a device, to reduce communication overheads during inter-domain source address validation.

According to a first aspect of this application, a validation information sending method is provided, where the method includes: A first network device obtains validation information of a first AS to which the first network device belongs and a neighbor AS of a second AS used for validation. The first network device sends the validation information and the neighbor AS to the second AS. The neighbor AS is a previous hop of the second AS in a direction from the first AS to the second AS. In other words, in this application, the first AS may send, to the validation AS, the validation information and the neighbor AS corresponding to the validation AS, and does not need to send the validation information to all ASs on a path with the first AS as an origin AS, to reduce communication overheads.

The first network device may be a controller, a boundary network device, or a route reflector (route reflector, RR) in the first AS. For example, the boundary network device may be an autonomous system boundary router (autonomous system boundary router, ASBR). The validation information may include a source prefix corresponding to the first AS and/or an identifier of the first AS. When the validation information includes the identifier of the first AS, after obtaining the validation information, the second AS obtains, based on the identifier of the first AS, a source prefix that needs validation.

Specifically, the first network device may obtain the neighbor AS in the following manners:

In one manner, the first network device obtains a first AS path with the first AS as an endpoint, where the first AS path includes the second AS. The first network device obtains the neighbor AS of the second AS based on the first AS path.

In an application scenario of fast rerouting or load balancing, an active/standby path or a path for implementing load balancing exists, to avoid a case in which a valid packet is incorrectly filtered out. Based on this, when obtaining the neighbor AS of the second AS, the first network device may further obtain a second AS path with the first AS as an endpoint, where the second AS path includes the second AS, and the second AS path is a standby path and/or a load balancing path that correspond/corresponds to the first AS path.

In one manner, the first network device receives the neighbor AS that is of the second AS and that is sent by a boundary network device in the first AS. The neighbor AS that is of the second AS and that is sent by the boundary network device in the first AS is an AS determined by the boundary network device in the first AS based on a routing table and/or a redirection path of the boundary network device.

In one manner, the first network device obtains the neighbor AS of the second AS based on at least one of a routing table, a redirection path, or an AS topology base of the first network device, where the AS topology base includes an identifier of an AS in a neighbor relationship.

In a possible implementation, that the first network device receives the neighbor AS that is of the second AS and that is sent by a boundary network device in the first AS includes: The first network device receives a first packet sent by the boundary network device in the first AS, where the first packet includes an identifier of the second AS and an identifier of the neighbor AS.

In a possible implementation, the first packet further includes a first sequence number and an identifier of the boundary network device in the first AS, and before the first network device sends the validation information and the neighbor AS to the second AS, the method further includes: The first network device obtains a second sequence number based on the identifier of the boundary network device in the first AS and a first correspondence, where the first correspondence includes the identifier of the boundary network device in the first AS and the second sequence number. The first network device determines that the first sequence number is greater than the second sequence number. Because checking validity of the first packet based on a sequence number in the first packet is equivalent to that the first network device advertises a neighbor AS in the first packet to a second network device only when determining that the first packet is a latest packet, the neighbor AS advertised by the first network device has time validity, and the neighbor AS advertised by the first network device is a latest neighbor AS. In this way, a risk that a source address validation entry obtained by the second network device is inaccurate or even a packet is incorrectly discarded because the first network device advertises an expired neighbor AS to the second network device is reduced.

In a possible implementation, that the first network device sends the validation information and the neighbor AS to the second AS may include: The first network device obtains an address of the second network device in the second AS. The first network device sends the validation information and the neighbor AS to the second network device based on the address of the second network device. The second network device may be a controller, an RR, or a boundary network device in the second AS. In other words, when sending the validation information and the neighbor AS to the second AS, the first network device may first obtain the address of the second network device, and then send the validation information and the neighbor AS to a network device indicated by the address.

In a possible implementation, the validation information includes an identifier of the first AS, and that the first network device sends the validation information and the neighbor AS to the second network device based on the address of the second network device includes: The first network device sends a second packet to the second network device, where the second packet includes the identifier of the first AS and the identifier of the neighbor AS.

In a possible implementation, the second packet further includes a third sequence number and an identifier of the first network device.

In a possible implementation, the first network device may further send a third packet to the second network device, where the third packet includes an identifier of the first AS, the identifier of the second AS, and the identifier of the neighbor AS.

Specifically, the third packet may include an origin AS identifier field, a validation AS identifier field, and a neighbor AS identifier field. The origin AS identifier field includes the identifier of the first AS, the validation AS identifier field includes the identifier of the second AS, and the neighbor AS identifier field includes the identifier of the neighbor AS.

In a possible implementation, before sending the validation information and the neighbor AS to the second AS, the first network device may further obtain the identifier of the second AS and an address of a next hop. An address of the next hop may be a controller in the second AS, a boundary network device in the second AS, or a route reflector in the second AS. During specific implementation, the identifier of the second AS and the address of the next hop may be preconfigured on the first network device.

In a possible implementation, the method further includes: The first network device obtains an identifier of a third AS, where the third AS is a downstream AS of the first AS. The first network device sends the identifier of the third AS to a target AS, where the target AS includes the second AS and/or a neighbor AS of the first AS. The first network device advertises, to the target AS, the AS identifier of the identifier of the third AS that can be sensed by the device, to help resolve problems that a validation entry in the validation AS is inaccurate and transmission of traffic from the third AS fails to be performed because the third AS becomes a hidden AS of the validation AS, and an origin prefix of the third AS is lacking in a prefix allowlist (validation entry) due to failure of sensing the third AS by the validation AS.

In a possible implementation, that the first network device obtains an identifier of a third AS includes: The first network device obtains the identifier of the third AS based on a first AS set and a second AS set, where the first AS set includes an identifier that is of an AS and that is historically received by the first network device and an identifier of the first AS, the second AS set includes an identifier that is of an AS and that has been sent by the first network device to the target AS, the first AS set includes the identifier of the third AS, and the second AS set does not include the identifier of the third AS. AS numbers included in the first AS set but not included in the second AS set are equivalent to ASs that can be sensed by the local end but have not been advertised historically. These ASs are determined as hidden ASs, so that accuracy of identifying the hidden ASs is improved, and the validation AS can sense existence of the hidden ASs.

In a possible implementation, that the first network device sends the identifier of the third AS to a target AS includes: The first network device obtains a fourth packet, and sends the fourth packet to the target AS, where the fourth packet includes the identifier of the third AS and an attribute of the third AS, the attribute of the third AS includes at least one of a source of the identifier of the third AS, a destination of the identifier of the third AS, a reason type, and a connection relationship flag, the reason type indicates a reason why the identifier of the third AS is not advertised in a historical time period, and the connection relationship flag indicates a connection relationship between the third AS and the first AS. Sending at least one of attributes of the third AS helps the validation AS construct a visualized topology based on the attribute of the third AS.

In a possible implementation, the fourth packet includes a BGP undate packet, the BGP undate packet includes a multi-protocol reachable network layer routing information MP_REACH_NLRI field, the MP_REACH_NLRI field includes an address family identifier, a subsequent address family identifier, and a network layer routing information NLRI field, the address family identifier or the subsequent address family identifier indicates to generate a validation entry or advertise an AS, the NLRI field includes the identifier of the third AS and the attribute of the third AS, and the NLRI field is encapsulated at an inner layer of the address family identifier or the subsequent address family identifier.

In a possible implementation, the fourth packet includes a BGP route-refresh packet, the BGP route-refresh packet includes an address family identifier, a subsequent address family identifier, the identifier of the third AS, and the attribute of the third AS, and the address family identifier or the subsequent address family identifier indicates to generate a validation entry or advertise an AS.

In a possible implementation, that the first network device obtains an identifier of a third AS includes: The network device receives a fifth packet from the third AS, where the fifth packet includes the identifier of the third AS, an address prefix corresponding to the third AS, and a no-export attribute. That the first network device obtains a fourth packet, and sends the fourth packet to the target AS includes: The network device obtains the fourth packet based on the fifth packet and sends the fourth packet to the target AS, where the target AS includes the identifier of the third AS and a path attribute, the path attribute includes a first flag, and the first identifier indicates that the identifier of the third AS is used to generate a validation entry.

In a possible implementation, before that the first network device sends the identifier of the third AS to a target AS, the method further includes: The first network device obtains a BGP open packet, where the BGP open packet includes a capability identifier, and the capability identifier indicates that advertising a downstream AS is supported. The first network device sends the BGP open packet to the target AS.

According to a second aspect of this application, a validation entry obtaining method is provided, and the method includes: A second network device in a second AS used for validation receives validation information of a first AS and a neighbor AS of the second AS that are sent by a first network device in the first AS. The second network device obtains a validation entry based on the validation information and the neighbor AS. The validation entry includes a source prefix corresponding to the first AS and an incoming interface for communication with the neighbor AS. In other words, after receiving the validation information and the neighbor AS that are sent by the first network device, the second network device in the validation AS generates the validation entry by using the validation information and the neighbor AS, to perform validation on validity of a received service packet by using the validation entry.

In a possible implementation, when the second AS includes a boundary network device, the second network device may further send the received validation information and neighbor AS to the boundary network device, so that each boundary network device can obtain the validation entry based on the validation information and the neighbor AS.

The validation information may include the source prefix and/or an identifier of the first AS. If the validation information includes the source prefix, the second network device may obtain the validation entry in the following manner: The second network device obtains an AS to which a third network device communicating with an interface belongs. If the AS to which the third network device belongs is the neighbor AS, the second network device determines that the interface is the incoming interface. The second network device obtains the validation entry based on the source prefix and the incoming interface.

If the validation information includes the identifier of the first AS, the second network device may obtain the validation entry in the following manner: The second network device obtains the AS to which the third network device communicating with the interface belongs; if the AS to which the third network device belongs is the neighbor AS, the second network device determines that the interface is the incoming interface; the second network device obtains the source prefix based on the identifier of the first AS and a correspondence; and the second network device obtains the validation entry based on the source prefix and the incoming interface. The correspondence includes the identifier of the first AS and the source prefix.

In a possible implementation, the second network device may further perform the following operations: The second network device receives a service packet, where the service packet includes a source internet protocol IP address; and the second network device determines validity of the service packet based on the validation entry, the source IP address, and an interface that receives the service packet. For example, after receiving the service packet, the second network device determines a source prefix based on the source IP address in the service packet, and searches, by using the source prefix, the validation entry for an incoming interface corresponding to the source prefix. If the incoming interface matches the interface used by the second network device to receive the service packet, it may indicate that the service packet is a valid packet.

In a possible implementation, the method further includes: The second network device receives an identifier of a third AS from the first network device, where the third AS is a downstream AS of the first AS. The second network device obtains a second validation entry based on the identifier of the third AS, where the second validation entry includes an address prefix corresponding to the third AS and an incoming interface of the second AS for communication with the third AS.

A third aspect of this application provides a validation information sending apparatus, where the apparatus is used in a first network device, and the apparatus includes: a processing unit, configured to obtain validation information of a first autonomous system AS to which the processing unit belongs and a neighbor AS of a second AS used for validation, where the neighbor AS is a previous hop of the second AS in a direction from the first AS to the second AS; and a sending unit, configured to send the validation information and the neighbor AS to the second AS.

In a possible implementation, the processing unit is specifically configured to: obtain a first AS path with the first AS as an endpoint, where the first AS path includes the second AS; and obtain the neighbor AS of the second AS based on the first AS path.

In a possible implementation, the processing unit is specifically configured to obtain a second AS path with the first AS as an endpoint, where the second AS path includes the second AS, and the second AS path is a standby path or a load balancing path of the first AS path.

In a possible implementation, the processing unit is specifically configured to receive the neighbor AS that is of the second AS and that is sent by a boundary network device in the first AS, where the neighbor AS that is of the second AS and that is sent by the boundary network device in the first AS is an AS determined by the boundary network device in the first AS based on a routing table and/or a redirection path of the boundary network device.

In a possible implementation, the processing unit is specifically configured to receive a first packet sent by the boundary network device in the first AS, where the first packet includes an identifier of the second AS and an identifier of the neighbor AS.

In a possible implementation, the first packet further includes a first sequence number and an identifier of the boundary network device in the first AS, and the processing unit is further configured to: obtain a second sequence number based on the identifier of the boundary network device in the first AS and a first correspondence, where the first correspondence includes the identifier of the boundary network device in the first AS and the second sequence number; and determine that the first sequence number is greater than the second sequence number.

In a possible implementation, the processing unit is specifically used by the first network device to obtain the neighbor AS of the second AS based on a routing table and/or a redirection path of the first network device.

In a possible implementation, the first network device is a controller, an RR, or a boundary network device.

In a possible implementation, the sending unit is specifically configured to: obtain an address of a second network device in the second AS, where the second network device is a controller, an RR, or a boundary network device; and send the validation information and the neighbor AS to the second network device based on the address of the second network device.

In a possible implementation, the validation information includes an identifier of the first AS, and the sending unit is configured to send a second packet to the second network device, where the second packet includes the identifier of the first AS and the identifier of the neighbor AS.

In a possible implementation, the second packet further includes a third sequence number and an identifier of the first network device.

In a possible implementation, the sending unit is further configured to send a third packet to the second network device, where the third packet includes an identifier of the first AS, the identifier of the second AS, and the identifier of the neighbor AS.

In a possible implementation, an origin AS identifier field in the third packet includes the identifier of the first AS, a validation AS identifier field in the third packet includes the identifier of the second AS, and a neighbor AS identifier field in the third packet includes the identifier of the neighbor AS.

In a possible implementation, the processing unit is further configured to obtain the identifier of the second AS and an address of a next hop, where the next hop is one of a controller in the second AS, a boundary network device in the second AS, or a route reflector in the second AS.

In a possible implementation, the validation information includes at least one of a source prefix corresponding to the first AS and the identifier of the first AS.

In a possible implementation, the apparatus further includes:
The processing unit is further configured to obtain an identifier of a third AS, where the third AS is a downstream AS of the first AS.

The sending unit is further configured to send the identifier of the third AS to a target AS, where the target AS includes the second AS and/or a neighbor AS of the first AS.

In a possible implementation, the processing unit is configured to obtain the identifier of the third AS based on a first AS set and a second AS set, where the first AS set includes an identifier that is of an AS and that is historically received by the first network device and an identifier of the first AS, the second AS set includes an identifier that is of an AS and that has been sent by the first network device to the target AS, the first AS set includes the identifier of the third AS, and the second AS set does not include the identifier of the third AS.

In a possible implementation, the sending unit is configured to: obtain a fourth packet, and send the fourth packet to the target AS, where the fourth packet includes the identifier of the third AS and an attribute of the third AS, the attribute of the third AS includes at least one of a source of the identifier of the third AS, a destination of the identifier of the third AS, a reason type, and a connection relationship flag, the reason type indicates a reason why the identifier of the third AS is not advertised in a historical time period, and the connection relationship flag indicates a connection relationship between the third AS and the first AS.

In a possible implementation, the fourth packet includes a BGP undate packet, the BGP undate packet includes a multi-protocol reachable network layer routing information MP_REACH_NLRI field, the MP_REACH_NLRI field includes an address family identifier, a subsequent address family identifier, and a network layer routing information NLRI field, the address family identifier or the subsequent address family identifier indicates to generate a validation entry or advertise an AS, the NLRI field includes the identifier of the third AS and the attribute of the third AS, and the NLRI field is encapsulated at an inner layer of the address family identifier or the subsequent address family identifier; or
the fourth packet includes a BGP route-refresh packet, the BGP route-refresh packet includes an address family identifier, a subsequent address family identifier, the identifier of the third AS, and the attribute of the third AS, and the address family identifier or the subsequent address family identifier indicates to generate a validation entry or advertise an AS.

According to a fourth aspect of this application, a validation entry obtaining apparatus is provided, where the apparatus is disposed in a second network device in a second AS used for validation, and the apparatus includes: a receiving unit, configured to receive validation information of a first AS and a neighbor AS of the second AS that are sent by a first network device in the first AS; and a processing unit, configured to obtain a validation entry based on the validation information and the neighbor AS, where the validation entry includes a source prefix corresponding to the first AS and an incoming interface for communication with the neighbor AS.

In a possible implementation, the apparatus further includes a sending unit. The sending unit is configured to send the validation information and the neighbor AS to a boundary network device in the second AS.

In a possible implementation, the validation information includes the source prefix, and the processing unit is specifically configured to: obtain an AS to which a third network device communicating with an interface belongs; if the AS to which the third network device belongs is the neighbor AS, determine that the interface is the incoming interface; and obtain the validation entry based on the source prefix and the incoming interface.

In a possible implementation, the validation information includes the identifier of the first AS, and the processing unit is specifically configured to: obtain the AS to which the third network device communicating with the interface belongs; if the AS to which the third network device belongs is the neighbor AS, determine that the interface is the incoming interface; obtain the source prefix based on the identifier of the first AS and a correspondence, where the correspondence includes the identifier of the first AS and the source prefix; and obtain the validation entry based on the source prefix and the incoming interface.

In a possible implementation, the receiving unit is further configured to receive a service packet, where the service packet includes a source internet protocol IP address. The processing unit is further configured to determine validity of the service packet based on the validation entry, the source IP address, and an interface that receives the service packet.

In a possible implementation, the receiving unit is further configured to receive an identifier of a third AS from the first network device, where the third AS is a downstream AS of the first AS.

The processing unit is further configured to obtain a second validation entry based on the identifier of the third AS, where the second validation entry includes an address prefix corresponding to the third AS and an incoming interface of the second AS for communication with the third AS.

According to a fifth aspect of this application, a network device is provided. The network device includes a processor and a memory.

The memory is configured to store instructions or a computer program.

The processor is configured to execute the instructions or the computer program in the memory, to enable the network device to perform the method according to any one of the first aspect or the possible implementations of the first aspect, or performs the method according to any one of the second aspect or the possible implementations of the second aspect.

According to a sixth aspect of this application, a network system is provided, and the system includes a first network device and a second network device. The first network device is configured to perform the method according to any one of the first aspect or the possible implementations of the first aspect. The second network device is configured to perform the method according to any one of the second aspect or the possible implementations of the second aspect.

According to a seventh aspect of this application, a computer-readable storage medium is provided, including instructions. When the instructions are run on a computer, the computer is enabled to perform the method according to any one of the first aspect or the possible implementations of the first aspect, or perform the method according to any one of the second aspect or the possible implementations of the second aspect.

According to an eighth aspect of this application, a computer program product is provided. The computer program product includes a program. When the program is run on a processor, a computer or a network device is enabled to perform the method according to any one of the first aspect or the possible implementations of the first aspect, or perform the method according to any one of the second aspect or the possible implementations of the second aspect.

According to the technical solutions provided in this application, the first network device in the first AS serving as the origin AS obtains the validation information corresponding to the first AS and the neighbor AS corresponding to the second AS used for validation. The neighbor AS is a previous-hop AS of the second AS in a direction from the first AS to the second AS. The first network device sends the validation information and the neighbor AS to the second AS, and the validation AS performs validation on the source address of the received service packet based on the validation information and the neighbor AS. In other words, in this application, the first AS may send, to the validation AS, the validation information and the neighbor AS corresponding to the validation AS, and does not need to send the validation information to all ASs on a path with the first AS as the origin AS, to reduce communication overheads.

### BRIEF DESCRIPTION OF DRAWINGS

To describe the technical solutions in embodiments of this application or the prior art more clearly, the following briefly describes the accompanying drawings for describing embodiments or the prior art. It is clear that, the accompanying drawings in the following descriptions show only some embodiments recorded in this application, and a person of ordinary skill in the art may still derive other drawings from these accompanying drawings without creative efforts.
FIG. 1a is a diagram of a network architecture according to an embodiment of this application;
FIG. 1b is a diagram of another network architecture according to an embodiment of this application;
FIG. 2 is a diagram of an application scenario according to an embodiment of this application;
FIG. 3 is a signaling exchange diagram of obtaining a validation entry according to an embodiment of this application;
FIG. 4 is a diagram of a structure of a DPP protocol packet according to an embodiment of this application;
FIG. 5 is a diagram of a structure of another DPP protocol packet according to an embodiment of this application;
FIG. 6 is a diagram of a structure of a DPP protocol packet according to an embodiment of this application;
FIG. 7 is a diagram of another application scenario according to an embodiment of this application;
FIG. 8 is a diagram of still another application scenario according to an embodiment of this application;
FIG. 9 is a diagram of an application scenario of advertising a hidden AS according to an embodiment of this application;
FIG. 10 is a diagram of another application scenario of advertising a hidden AS according to an embodiment of this application;
FIG. 11 is a diagram of a structure of a protocol packet for advertising a hidden AS according to an embodiment of this application;
FIG. 12 is a diagram of a structure of a path attribute in a BGP update packet according to an embodiment of this application;
FIG. 13 is a diagram of a structure of single piece of NLRI in a path attribute according to an embodiment of this application;
FIG. 14 is a diagram of a packet structure of a BGP (route-refresh) packet according to an embodiment of this application;
FIG. 15 is a diagram of a structure of a validation information sending apparatus according to an embodiment of this application;
FIG. 16 is a diagram of a structure of a validation entry obtaining apparatus according to an embodiment of this application;
FIG. 17 is a diagram of a structure of a network device according to an embodiment of this application; and
FIG. 18 is a diagram of a structure of another network device according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely a part rather than all of embodiments of this application.

Currently, a DSAV method may be classified into two scenarios: intra-domain and inter-domain. An inter-domain solution is mainly to perform validation on a source address of an autonomous system (AS) granularity, and a single AS is used as a minimum deployment node. During specific implementation, an SAV table is dynamically generated and updated based on learned routing information, and then the SAV table is used to check a source address in a received packet.

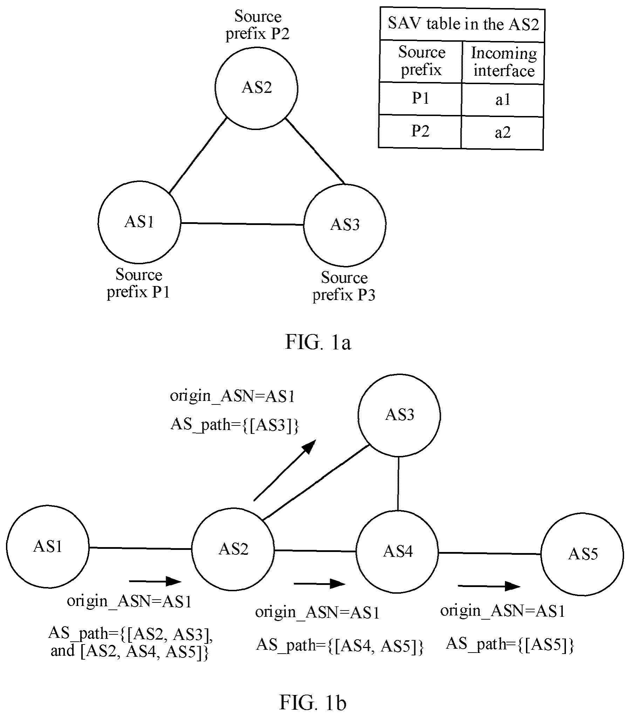

For example, in a diagram of inter-domain source address validation shown in FIG. 1a, in this application scenario, a source prefix corresponding to AS1 is P1, a source prefix corresponding to AS2 is P2, and a source prefix corresponding to AS3 is P3. An SAV table is created in AS2 by using an example in which validation is performed on the source prefix P1 and the source prefix P2. As shown in FIG. 1a, a boundary network device in AS2 is connected to a boundary network device in AS1 through an interface a1, and a boundary network device in AS2 is connected to a boundary network device in AS2 through an interface a2. The SAV table established in AS2 records a correspondence between P1 and a1, and a correspondence between P2 and a2. After receiving a packet sent by AS1, AS2 determines validity of a source address in the received packet based on the SAV table.

When the DSAV solution is executed between domains, the following protocol packets are usually involved.

Source prefix advertisement (source prefix advertisement, SPA) protocol packet: The SPA protocol packet mainly includes two fields: an AS identifier (origin ASN) field of an origin AS and a valid source prefix (source prefix) field corresponding to the origin AS. The origin AS sends a SPA protocol packet, so that an AS used for validation can learn of a source prefix that needs validation.

Destination prefix probing (destination prefix probing, DPP) protocol packet: The DPP protocol packet mainly includes five fields: a source address field of the DPP packet, a destination address field of the DPP packet, an AS identifier (origin ASN) field of the origin AS, an AS_path set (AS_path_set) field selected by the origin AS based on a routing table, and a sequence number field of the DPP packet. The origin ASN and AS_path_set fields are key fields for generating an SAV table.

For ease of understanding an implementation process of the inter-domain DSAV method, refer to a diagram of an application scenario shown in FIG. 1b. In FIG. 1b, AS1 to AS5 respectively have source prefixes P1 to P5, and an inter-domain DSAV validation mechanism is deployed on a boundary network device in each autonomous system, to prevent, by running an inter-domain DSAV protocol, another AS from forging a source address of the AS. AS1 serves as an origin AS, and other ASs serve as validation ASs. The validation AS receives SPA and DPP packets sent by AS1, generates a source address validation table, and records the source prefix of AS1 and a corresponding valid incoming interface, to avoid receiving a packet with a forged source address of AS1. A specific working procedure is shown in the following.
1. AS1, serving as the origin AS, generates the SPA protocol packet, and sends the SPA protocol packet in a broadcast manner via a boundary network device like an autonomous system boundary router (autonomous system boundary router, ASBR). For example, the SPA protocol packet sent by AS1 in a broadcast manner is shown in Table 1.

**Table 1**

| |
|---|
| SPA protocol packet |
| Origin ASN: AS1 |
| Source prefixes: {set of prefixes such as P1 originating from AS 1 } |

After AS1 broadcasts the SPA protocol packet to AS2 to AS8, other ASs in a network receive the SPA protocol packet, and generate a source address record entry shown in Table 2 below.

**Table 2**

| Source address record table of AS2 to AS5 | |
|---|---|
| Origin ASN | Source prefixes |
| AS1 | Set of prefixes such as P1 originating from AS1 |

2. The boundary network device in AS1 obtains an AS_path set based on a routing entry (routing information base, RIB), and generates and sends the DPP protocol packet. Specifically, the RIB is shown in Table 3 below.

**Table 3**

| RIB for AS1 (RIB table of AS1) | | |
|---|---|---|
| Destination prefix | Next hop | AS_path |
| P2 | AS2 | AS2 |
| P3 | AS2 | AS2 and AS3 |
| P4 | AS2 | AS2 and AS4 |
| P5 | AS2 | AS2, AS4, and AS5 |

The boundary network device constructs the DPP protocol packet shown in FIG. 1b, including an AS identifier of the origin AS and all AS_paths in the RIB table. A shorter AS_path is included in a longer AS_path and does not need to be included in the DPP protocol packet.

3. As the validation AS, after receiving the DPP protocol packet sent by AS1, AS2 generates the source address validation table. The source address validation table generated by a boundary network device in AS2 is shown in Table 4 below.

**Table 4**

| SAV table for AS2 | |
|---|---|
| Source prefix (source prefix) | Incoming interface (incoming interface) |
| P1 | AS2<->AS1 |

P1 is a source IP prefix of AS1, and may be obtained from the source address record table. The incoming interface is all interfaces that interconnect AS2 and AS1, and is determined based on a previous-hop AS of the DPP packet.

4. As the validation AS, after generating the source address validation table, AS2 relays the DPP protocol packet to a next-hop AS.

An origin ASN field in the relayed DPP packet generated by AS2 remains unchanged, an AS identifier of AS2 is removed from the AS_path, and then a new DPP packet is constructed and sent to a next-hop AS in the AS_path. For example, if the AS_path is [AS2, AS3], the next hop is AS3 after AS2 is removed. If the AS_path is [AS2, AS4, AS5], the next hop is AS4 after AS2 is removed.

5. After receiving the DPP protocol packet, according to steps 3 and 4, the other ASs generate SAV tables and relay the DPP packet until the AS_path is null. In this case, AS2 to AS5 generate the SAV tables for the source prefix of AS1.

6. After receiving a service packet, the other ASs validate whether a source IP of the service packet is authentic based on the SAV tables. Currently, there are two validation modes: an allowlist validation mode and a graylist validation mode.

In the allowlist validation mode, any packet that is with an unknown source address or that reaches an interface in an invalid manner is blocked.

In the graylist validation mode, only a packet that is with a known source address but that reaches an interface in an invalid manner is discarded. A data packet with an unknown source address is accepted in this mode.

Specifically, packet handling in the two validation modes is shown in the following.

| | Source address validation status in a packet | Handling result of source address validation | |
|---|---|---|---|
| | | Allowlist validation mode | Graylist validation mode |
| Scenario 1 | A matched prefix is present, and an incoming interface of the packet matches an interface recorded in a source address validation entry | Pass | Pass |
| Scenario 2 | A matched prefix is present, but an incoming interface of the packet does not match an interface recorded in a source address validation entry | Rejected | Rejected |
| Scenario 3 | No matched prefix present | Rejected | Pass |

It can be learned from the foregoing that, to enable the validation AS to generate an accurate SAV table, in the inter-domain DSAV solution, a manner in which the origin AS sends the DPP packet, and the other ASs generate the SAV tables and relay the DPP packet is used. This solution requires that an inter-domain DSAV mechanism be deployed on boundary network devices of all ASs on the AS_path, and a new DPP protocol packet needs to be generated. This implementation has the following problems: 1. Protocol overheads are large. If there are a large quantity of ASs, an AS_path formed by the ASs has a larger scale and cannot be fully transmitted in a DPP protocol packet. In addition, each ASBR of a source AS needs to generate a DPP packet, and an ASBR of the validation AS needs to generate and relay a DPP packet. This causes extra calculation overheads and communication overheads. 2. In the inter-domain DSAV solution, all ASs on an AS_path selected by the origin AS generate SAV tables in sequence based on a hop-by-hop relay detection mode of the AS_path. This requires that the inter-domain DSAV mechanism be deployed on the boundary network devices of all the ASs on the AS_path.

In view of this, this application provides a validation information sending method. In this solution, the AS used for validation, namely, a second AS, may be determined in advance. A network device in the origin AS, namely, a first network device in a first AS, first obtains validation information of the first AS and a neighbor AS of the second AS, where the neighbor AS is a previous hop of the second AS in a direction from the first AS to the second AS. In other words, a traffic direction from the origin AS to the validation AS is indicated via the neighbor AS. Then, the first network device sends the validation information and the neighbor AS to the second AS. In other words, the first network device may need to send the validation information and the neighbor AS only to the second AS, does not need to send the validation information to all the AS s on the AS_path, and does not need to deploy the inter-domain DSAV mechanism on the boundary network devices of all the ASs on the AS_path. This not only reduces communication overheads, but also can be applied to more network scenarios. The validation information may be an AS identifier of the first AS or a source prefix corresponding to the first AS.

The following describes a system architecture in an embodiment of this application by using an example.

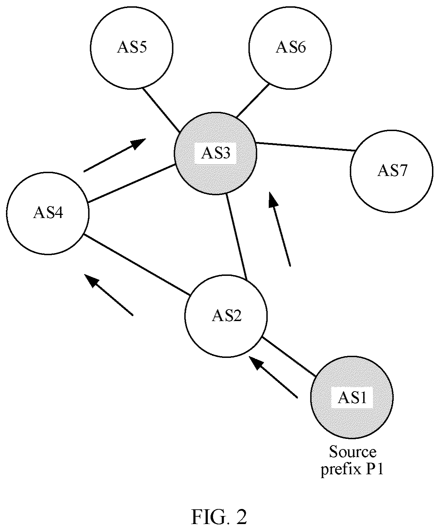

FIG. 2 is a diagram of an architecture of a network system according to an embodiment of this application. The network system shown in FIG. 2 includes seven ASs: AS1 to AS7. AS1 serves as an origin AS, a source prefix that needs validation is P1, and AS3 serves as a validation AS. A network device in AS3 generates an SAV table, to prevent ASS to AS7 from forging traffic of AS1. The network device in AS1 may determine, based on an AS_path attribute in a RIB table or an AS forwarding path for collecting redirected traffic, that all AS forwarding paths that use AS1 as the origin AS are [AS1, AS2, AS3, AS5], [AS1, AS2, AS3, AS6], [AS1, AS2, AS3, AS7], [AS1, AS2, AS4, AS3, AS5], [AS1, AS2, AS4, AS3, AS6], and [AS1, AS2, AS4, AS3, AS7]. After obtaining the forwarding paths, the network device in AS1 may determine that neighbor ASs of the validation AS are AS2 and AS4. In this case, the network device in AS1 sends, to AS3, collected validation information and a neighbor AS (for example, AS2 and AS4) corresponding to AS3, so that a network device in AS3 generates an SAV table based on the received validation information and neighbor AS.

For ease of understanding the technical solutions provided in embodiments of this application, the following provides descriptions with reference to an application scenario shown in FIG. 2.

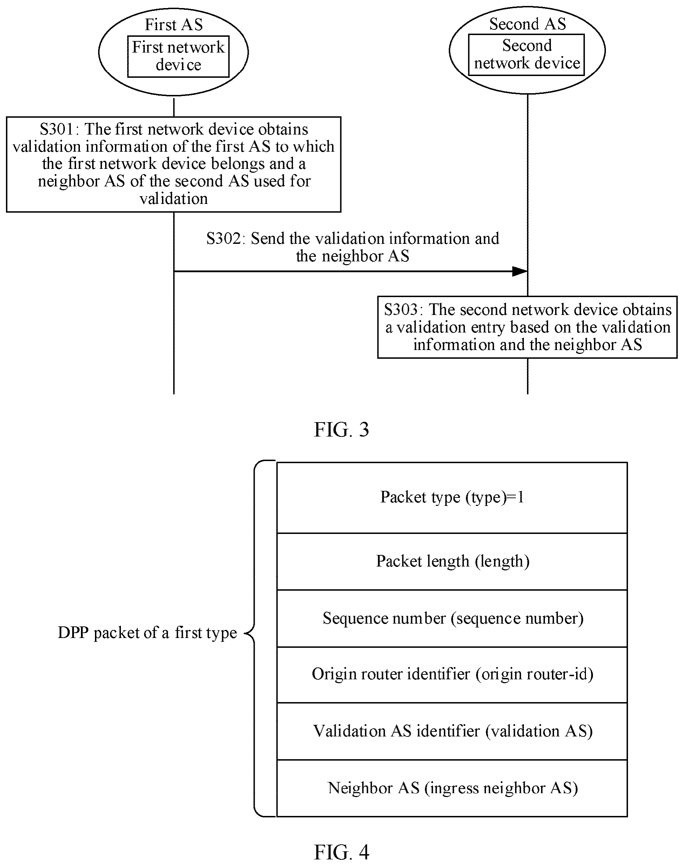

FIG. 3 is a flowchart of a validation entry obtaining method according to an embodiment of this application. The method includes S301 to S303.

S301: A first network device obtains validation information of a first AS to which the first network device belongs and a neighbor AS of a second AS used for validation.

In this embodiment, a network device, namely, the first network device, in an origin AS, namely, the first AS collects the validation information of the first AS and the neighbor AS corresponding to the validation AS, namely, the second AS. The neighbor AS is a previous-hop AS corresponding to the second AS in a direction from the first AS to the second AS, and the validation information includes an AS identifier of the first AS and/or a source prefix corresponding to the first AS. The source prefix is, for example, a prefix of an IP address, and the source prefix is used for source address validation. For example, in the application scenario shown in FIG. 2, the first AS is represented as AS1, and the second AS is represented as AS3. In this case, neighbor ASs corresponding to AS3 in a direction from AS1 to AS3 are AS2 and AS4.

Before obtaining the neighbor AS corresponding to the second AS, the first network device first obtains an identifier of the second AS, to further determine the neighbor AS corresponding to the second AS. The identifier of the second AS used for validation may be preconfigured on the first network device, or the first network device selects, as the validation AS according to a preconfigured selection rule, an AS from an AS path with the first AS as an endpoint. The selection rule may be set based on an actual application situation. This is not limited in embodiments. For example, the selection rule is that an AS that has a largest quantity of neighbor ASs in the AS path with the first AS as an endpoint is used as the validation AS. For example, in the application scenario shown in FIG. 2, a quantity of neighbor ASs corresponding to AS3 is the largest, and the neighbor ASs include AS2, AS4, AS5, AS6, and AS7. In this case, AS3 is the validation AS.

The first network device may be a boundary network device, a controller, or an RR in the first AS, and the first network device is configured to collect the validation information of the first AS and the neighbor AS corresponding to the second AS. For example, when the validation information is the source prefix corresponding to the first AS, a source prefix that needs validation may be preconfigured on the first network device; or when the validation information is the AS identifier of the first AS, a correspondence between the AS identifier of the first AS and the source prefix may be preconfigured on the first network device, and the first network device sends the correspondence to the second AS.

The first network device may obtain the neighbor AS of the second AS in the following manners.

In a first manner, the first network device obtains a first AS path with the first AS as an endpoint, where the first AS path includes the second AS. The first network device obtains the neighbor AS of the second AS based on the first AS path.

In this embodiment, the first network device may first obtain the first AS path with the first AS as the endpoint, and determine the neighbor AS of the second AS from ASs included in the first AS path. The first AS path with the first AS as the endpoint may include an AS path with the first AS as an origin AS and an AS path with the first AS as an end AS. For example, in the application scenario shown in FIG. 2, the first AS path may include [AS1->AS2->AS3...], [AS1->AS2->AS4->AS3...], [AS5->AS3->AS4->AS2->AS1], [AS5->AS3->AS2->AS1], [AS6->AS3->AS4->AS2->AS1], [AS6->AS3->AS2->AS1], and the like. Because the neighbor AS of the second AS is a previous-hop AS corresponding to the second AS in the direction from the first AS to the second AS, it may be determined, from [AS1->AS2->AS3...] and [AS1->AS2->AS4->AS3...] in the first AS path, that the neighbor ASs corresponding to the second AS are AS2 and AS4. It should be noted that, it can be learned from Table 3 that when the first network device obtains, by using the RIB table, the first AS path with AS1 as the origin AS, the obtained first AS path does not include the origin AS, that is, AS1.

That the first network device obtains the first AS path with the first AS as the endpoint may include: The first network device obtains, based on an AS_path attribute and/or a redirection path in a local routing table, the first AS path with the first AS as the endpoint; and/or another network device in the first AS obtains, based on at least one of an AS_path attribute, a redirection path, or an AS topology base in a local routing table, the first AS path with the first AS as the endpoint, and then the another network device sends the obtained first AS path to the first network device.

For example, when the first AS includes a plurality of boundary network devices, a specific boundary network device may be preconfigured as a designated router (designated router, DR), or a boundary network device may be selected from the plurality of boundary network devices as a DR according to a selection rule. The selection rule may be configured based on an actual application situation. For example, the selection rule is that a boundary network device having a border gateway protocol (border gateway protocol, BGP) peer relationship with the second AS is preferentially selected as the DR. For example, in the application scenario shown in FIG. 2, it is assumed that AS1 includes three boundary network devices: an ASBR 1, an ASBR 2, and an ASBR 3, where the ASBR 2 has a BGP peer relationship with AS2, and the ASBR 2 is selected as the DR. Alternatively, when the first AS includes a boundary network device, a controller, or an RR, the controller or the RR may be selected as the DR. After the DR is selected, each boundary network device in the first AS may obtain the first AS path based on an AS_path attribute and/or a redirection path in a local routing table corresponding to the boundary network device, and send the first AS path to the DR, and the DR obtains the neighbor AS of the second AS based on the first AS path.

In some application scenarios, a fast route (fast reroute, FRR) may be used to provide a redundant link in a form of a backup route. In this way, a route can be quickly switched when a fault occurs, to ensure uninterrupted packet forwarding and enhance network reliability. Alternatively, in a load balancing scenario, both an active path and a standby path are used to forward a packet. When the neighbor AS of the second AS is obtained, if the foregoing scenarios are ignored, a part of the collected neighbor AS of the second AS may be missing. As a result, a valid packet is incorrectly filtered out. Based on this, when obtaining the neighbor AS of the second AS, the first network device may further obtain a second AS path with the first AS as an endpoint, where the second AS path includes the second AS, and the second AS path is a standby path and/or a load balancing path that correspond/corresponds to the first AS path. Specifically, the first network device may obtain the standby path or the load balancing path by searching a routing table, and obtain the neighbor AS if the neighbor AS corresponding to the second AS exists in the standby path or the load balancing path. When a route reflector exists, the first network device may fail to determine a complete forwarding path. In this case, the route reflector may advertise the complete forwarding path to the first network device by enabling an add-path feature. The add-path feature is used to advertise a plurality of paths with a same source prefix. Generally, when advertising a BGP route, a network device advertises an optimal path. After the add-path feature is enabled, the network device advertises optimal and sub-optimal paths when advertising the BGP route.

In a second manner, the first network device receives the neighbor AS that is of the second AS and that is sent by a boundary network device in the first AS. The neighbor AS that is of the second AS and that is sent by the boundary network device in the first AS is an AS determined by the boundary network device in the first AS based on a routing table and/or a redirection path of the boundary network device.

In this embodiment, the boundary network device in the first AS may determine the neighbor AS of the second AS based on the routing table and/or the redirection path of the boundary network device, and send the neighbor AS of the second AS to the first network device. For example, the boundary network device in the first AS may obtain, based on the routing table and/or the redirection path of the boundary network device, an AS path with the first AS as an endpoint, determine the neighbor AS of the second AS from the AS path, and send the determined neighbor AS of the second AS to the first network device. The AS path obtained by the boundary network device may include an active path and a standby path that use the first AS as an endpoint, and/or at least two AS paths that use the first AS as an endpoint and that implement load balancing. The AS path includes the second AS. Specifically, both the active path and the standby path include the second AS, and each of the at least two AS paths that implement the load balancing includes the second AS.

In a possible implementation in which the boundary network device in the first AS advertises the neighbor AS to the first network device, the boundary network device in the first AS obtains a first packet, and the boundary network device in the first AS sends the first packet to the first network device. The first packet includes the identifier of the second AS and an identifier of the neighbor AS of the second AS. For example, the first packet includes a validation AS (validation AS) field and a neighbor AS (ingress neighbor AS) field. The validation AS field includes the identifier of the second AS. The neighbor AS field includes the identifier of the neighbor AS of the second AS. The first network device receives the first packet. The first network device parses the first packet, to obtain the identifier of the second AS and the identifier of the neighbor AS of the second AS that are carried in the first packet. Because the identifier of the validation AS and the identifier of the neighbor AS are carried in the same packet, it is equivalent to indicating that the neighbor AS in the packet is a neighbor AS of a specific AS, in other words, indicating a correspondence between the validation AS and the neighbor AS. For example, because the first packet carries the identifier of the second AS and the identifier of the neighbor AS, it indicates that the neighbor AS in the first packet is the neighbor AS of the second AS rather than a neighbor AS of another AS. In addition, the first packet transmitted inside the first AS does not need to carry the identifier of the first AS, to help reduce packet transmission overheads.

In a possible implementation, the boundary network device in the first AS establishes an interior gateway protocol (interior border gateway protocol, IBGP) connection with the first network device. In other words, the first network device is an IBGP peer of the boundary network device in the first AS. The boundary network device in the first AS sends the validation information and the neighbor AS to the first network device over the IBGP connection.

Optionally, the first packet further includes a sequence number. The sequence number indicates an old and new degree of the first packet. For example, a larger sequence number indicates a newer packet. After the first network device receives the first packet, the first network device further obtains the sequence number carried in the first packet, and checks validity of the first packet based on the sequence number in the first packet. For example, the first network device compares the sequence number in the first packet with a sequence number locally recorded in the first network device. If the sequence number in the first packet is greater than the sequence number locally recorded in the first network device, the first network device determines that the first packet is valid, and the first network device further performs a step of sending the neighbor AS in the first packet to a second network device. If the sequence number in the first packet is less than or equal to the sequence number locally recorded in the first network device, the first network device determines that the first packet is invalid. In this case, the first network device discards the first packet. The first network device does not need to record the neighbor AS in the first packet, and does not need to further perform a step of sending the neighbor AS in the first packet to a second network device. Because checking validity of the first packet based on the sequence number in the first packet is equivalent to that the first network device advertises the neighbor AS in the first packet to the second network device only when determining that the first packet is a latest DPP packet, the neighbor AS advertised by the first network device has time validity, and the neighbor AS advertised by the first network device is a latest neighbor AS. In this way, a risk that a source address validation entry obtained by the second network device is inaccurate or even a packet is incorrectly discarded because the first network device advertises an expired neighbor AS to the second network device is reduced.

Optionally, if the sequence number in the first packet is greater than the sequence number locally recorded in the first network device, the first network device updates the locally recorded sequence number to the sequence number in the first packet, so that the locally recorded sequence number has time validity. The locally recorded sequence number can be dynamically updated with a periodic advertisement process of the neighbor AS, so that validity of a packet is checked when the packet that carries a neighbor AS and a sequence number is received next time.

To distinguish between different sequence numbers, the following uses a "first sequence number" to describe a sequence number carried in a packet received by the first network device from the boundary network device in the first AS, uses a "second sequence number" to describe the sequence number locally recorded in the first network device, uses a "third sequence number" to describe a sequence number carried in a packet sent by the first network device to the second network device, and uses a "fourth sequence number" to describe a sequence number locally recorded in the second network device.

For implementation details of comparing sequence numbers by the first network device, in a possible implementation, the first packet includes an identifier of the boundary network device in the first AS and the first sequence number. After the first network device receives the first packet, the first network device obtains the identifier of the boundary network device in the first AS and the first sequence number that are carried in the first packet. The first network device obtains the second sequence number based on the identifier of the boundary network device in the first AS and a first correspondence. The first correspondence includes the identifier of the boundary network device in the first AS and the second sequence number. The first network device may search the first correspondence by using the identifier of the boundary network device in the first AS as an index (key), to obtain the second sequence number. The first network device compares the first sequence number carried in the packet with the second sequence number obtained from the first correspondence.

For a source of the first correspondence on the first network device, in a possible implementation, when the first network device receives a packet that includes an origin sequence number, the identifier of the boundary network device in the first AS, and the neighbor AS, the first network device establishes the first correspondence based on the origin sequence number and the identifier of the boundary network device in the first AS that are in the packet in response to the packet that includes the start sequence number. The first correspondence includes the origin sequence number and the identifier of the boundary network device in the first AS. The origin sequence number is a smallest value in a value range of the sequence number, and the smallest value of the sequence number indicates that the neighbor AS is advertised for a first time. For example, the origin sequence number is 0 or a positive integer. After the first packet that includes the sequence number, the identifier of the boundary network device in the first AS, and the neighbor AS is subsequently received, if the sequence number in the first packet is greater than the origin sequence number, the first network device updates the origin sequence number in the first correspondence to the sequence number in the first packet, to maintain the time validity of the locally recorded sequence number. By analogy, each time the first network device subsequently receives a packet that includes a sequence number, the identifier of the boundary network device in the first AS, and the neighbor AS, if the sequence number in the received packet is greater than the sequence number in the first correspondence, the sequence number in the first correspondence is updated to the sequence number in the received packet.

In a possible implementation, based on the sequence number in the first packet being the origin sequence number, the first network device does not need to perform the step of comparing the sequence number in the packet with the locally recorded sequence number, and sends the neighbor AS in the first packet to the second network device.

In a possible implementation, the boundary network device in the first AS periodically sends the neighbor AS of the second AS and the sequence number to the first network device. When sending the neighbor AS of the second AS to the first network device for a first time, the boundary network device in the first AS adds the neighbor AS and the origin sequence number to a packet. Each time the boundary network device in the first AS sends the neighbor AS of the second AS to the first network device once, the boundary network device increases the sequence number (for example, increases the sequence number by one), and sends an increased sequence number and the neighbor AS to the first network device, so that the sequence number sent to the first network device this time is greater than a sequence number sent to the first network device last time. For example, a sequence number in a first packet sent by the boundary network device in the first AS to the first network device for a first time is the origin sequence number. A sequence number in a first packet sent by the boundary network device in the first AS to the first network device for a second time is a sequence number obtained by increasing the origin sequence number (for example, the origin sequence number is increased by one). By analogy, a sequence number in a first packet sent by the boundary network device in the first AS to the first network device for an i^{th} time is obtained by increasing a sequence number in a first packet sent to the first network device for an (i-1)^{th} time. For example, the sequence number sent for the i^{th} time is obtained by increasing the sequence number sent for the (i-1)^{th} time by one.

The first packet is, for example, a DPP protocol packet. The first packet is, for example, a DPP packet of a first type. For example, the first packet includes a type field, and the type field identifies the DPP packet of the first type.

The DPP packet of the first type is a DPP packet transmitted inside a source AS. The DPP packet of the first type is used to advertise the neighbor AS of the validation AS (for example, the neighbor AS of the second AS) inside the source AS. FIG. 4 is a diagram of a format of a DPP packet according to an embodiment of this application. The DPP packet provided in FIG. 4 is, for example, a DPP packet of the first type. The DPP packet of the first type includes a packet type (type) field, a packet length (length) field, a validation AS (validation AS) field, and a neighbor AS (ingress neighbor AS) field. For example, a value of the type field is 1, indicating that a type of the packet is a DPP packet transmitted inside the source AS. The length field indicates a packet length. The validation AS field includes an AS number of the validation AS. The neighbor AS field includes an AS number of the neighbor AS of the validation AS. Optionally, the DPP packet of the first type further includes a sequence number (sequence number) field. The sequence number field includes a sequence number. Optionally, the DPP packet of the first type further includes an origin router identifier (origin router-id) field. The origin router-id field includes an identifier of a network device sending the DPP packet.

In a third manner, the first network device obtains the neighbor AS of the second AS based on a routing table and/or a redirection path of the first network device.

For example, the first network device may obtain, based on the routing table and/or the redirection path of the first network device, an AS path with the first AS as an endpoint, and determine the neighbor AS of the second AS from the AS path. The AS path may include an active path and a standby path that use the first AS as an endpoint, and/or at least two AS paths that use the first AS as an endpoint and that implement load balancing. The AS path includes the second AS. Specifically, both the active path and the standby path include the second AS, and each of the at least two AS paths that implement the load balancing includes the second AS.

In a fourth manner, the first network device obtains the neighbor AS of the second AS based on an AS topology base. The AS topology base indicates a topology relationship between ASs. For example, the AS topology base includes an identifier of an AS in a neighbor relationship. For example, the AS topology base includes the identifier of the second AS and an identifier of the neighbor AS. The first network device searches the AS topology base by using the identifier of the second AS as an index (key), to obtain the neighbor AS of the second AS. The AS topology base may be any database that is publicly available for obtaining an AS neighboring relationship. For example, the AS topology base is, for example, a database managed based on a resource public key infrastructure (resource public key infrastructure, RPKI). The AS topology base is, for example, an autonomous system provider authorization (autonomous system provider authorization, ASPA) database, an internet routing registry (internet routing registry, IRR) database, and a route origin authorization (route origin authorization, ROA) database.

S302: The first network device sends the validation information and the neighbor AS to the second AS.

After obtaining the validation information of the first AS and the neighbor AS corresponding to the second AS, the first network device sends the validation information and the neighbor AS to the second AS. For example, the first network device sends the validation information and the neighbor AS to a specific network device in the second AS.

In a possible implementation, the first network device obtains an address of the second network device in the second AS. The first network device sends the validation information and the neighbor AS to the second network device based on the address of the second network device. The second network device may be a controller, an RR, or a boundary network device in the second AS. During specific implementation, the address of the second network device may be preconfigured in the first network device. When sending the validation information and the neighbor AS to the second AS, the first network device obtains the configured address of the second network device, and sends the validation information and the neighbor AS to the network device indicated by the address. Alternatively, the first network device obtains an address of a second network device that is in the second AS and that establishes a BGP peer relationship with the first network device, and sends the validation information and the neighbor AS to the network device indicated by the address.

In a possible implementation in which the neighbor AS of the second AS is advertised between the first AS and the second AS, the first network device obtains a second packet, and the first network device sends the second packet to the second network device, where the second packet includes the identifier of the first AS and the identifier of the neighbor AS of the second AS. For example, the second packet includes a source AS (source AS) field and a neighbor AS (ingress neighbor AS) field. The source AS field includes the identifier of the first AS. The neighbor AS field includes the identifier of the neighbor AS of the second AS. In addition, the second packet transmitted inside the second AS does not need to carry the identifier of the second AS, to help reduce packet transmission overheads.

Optionally, the second packet further includes a third sequence number. The third sequence number indicates an old and new degree of the second packet. For example, a larger third sequence number indicates a newer packet. For a specific process of using the third sequence number in the second packet, refer to descriptions in S303.

Optionally, the second packet further includes the identifier of the first AS. The identifier of the first AS helps distinguish an AS from which the second packet comes. When the second AS (validation AS) separately establishes connections to a plurality of source ASs, a network device in the second AS can determine, based on the identifier of the first AS, that the neighbor AS is advertised by using the identifier of the first AS. This reduces a risk that the network device in the second AS confuses neighbor ASs advertised by different source ASs.

Optionally, the second packet further includes an identifier of the first network device. For example, the second packet includes a router-id of the first network device, and the router-id of the first network device is, for example, an IP address of a specific interface of the first network device. The second packet further includes the identifier of the first network device, to help distinguish a device from which the second packet comes.

For a specific process of using the identifier of the first AS and the identifier of the first network device that are in the second packet, refer to the descriptions in S303.

The second packet is, for example, a DPP protocol packet. The second packet is, for example, a DPP packet of a second type. For example, the second packet includes a type field, and the type field identifies the DPP packet of the second type.

In a possible implementation of obtaining the second packet, the first network device obtains the second packet based on the first packet. For example, after receiving the first packet, the first network device replaces the type of the first packet from the first type with the second type, and replaces the AS identifier in the first packet from the identifier of the second AS with the identifier of the first AS, to obtain the second packet. The DPP packet of the first type is converted into the DPP packet of the second type by replacing the type and the AS identifier.

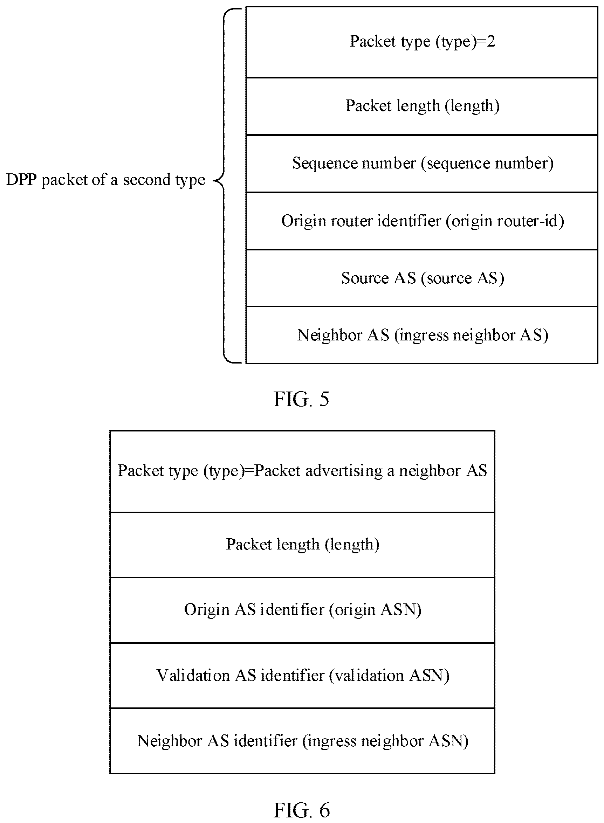

The DPP packet of the second type is a DPP packet transmitted between the source AS and the validation AS or a DPP packet transmitted inside the validation AS. The DPP packet of the second type is used to advertise the neighbor AS of the validation AS (for example, the neighbor AS of the second AS) between the source AS and the validation AS or inside the validation AS. FIG. 5 is a diagram of a format of a DPP packet according to an embodiment of this application. The DPP packet provided in FIG. 5 is, for example, a DPP packet of the second type. The DPP packet of the second type includes a packet type (type) field, a length (length) field, a source AS (source AS) field, and a neighbor AS (ingress neighbor AS) field. For example, a value of the type field is 2, indicating that a type of the packet is a DPP packet transmitted between the source AS and the validation AS or a DPP packet transmitted inside the validation AS. The length field indicates a packet length. The source AS field includes an AS number of a source AS. The neighbor AS field includes an AS number of the neighbor AS of the validation AS. Optionally, the DPP packet of the second type further includes a sequence number field. The sequence number field includes a sequence number. Optionally, the DPP packet of the second type further includes an origin router identifier field. The origin router-id field includes an identifier of a network device sending the DPP packet.

In a possible implementation, the first network device may further send a third packet to the second network device, where the third packet includes the identifier of the first AS, the identifier of the second AS, and the identifier of the neighbor AS. The third packet may be a DPP protocol packet. A format of the DPP protocol packet is shown in FIG. 6, including a packet type (type) field, a length (length) field, an origin AS identifier (origin ASN) field, a validation AS identifier (validation ASN) field, and a neighbor AS identifier (ingress neighbor ASN) field. The packet type (type) field indicates a type of the packet. For example, the packet type field indicates that the third packet is a packet advertising the neighbor AS. The origin AS identifier field in the packet includes the identifier of the first AS, the validation AS identifier field in the packet includes the identifier of the second AS, and the neighbor AS identifier field in the packet includes the identifier of the neighbor AS. When the second AS has a plurality of neighbor ASs, the neighbor AS identifier field includes the plurality of neighbor ASs. For example, in the application scenario shown in FIG. 2, AS3 corresponds to two neighbor ASs: AS2 and AS4, and the neighbor AS identifier field includes AS2 and AS4. The first network device may periodically send a DPP protocol packet to the second network device, for the second network device to update a validation entry based on a newly received DPP protocol packet.

S303: The second network device in the second AS receives the validation information and the neighbor AS, and obtains a validation entry based on the validation information and the neighbor AS.

In this embodiment, after receiving the validation information and the neighbor AS that are sent by the first network device, the second network device generates the validation entry by using the validation information and the neighbor AS. The validation entry includes a source prefix corresponding to the first AS and an incoming interface for communication with the neighbor AS. The incoming interface configured for the communication with the neighbor AS is an interface on the second AS in a direction from the neighbor AS to the second AS.

In a possible implementation, when the second network device is a DR in the second AS, to enable all boundary network devices in the second AS to generate the validation entry and implement validation on the source prefix, the second network device sends the validation information and the neighbor AS to the boundary network devices in the second AS after receiving the validation information and the neighbor AS. For example, in the application scenario shown in FIG. 2, it is assumed that AS3 includes five ASBRs: an ASBR 1, an ASBR2, an ASBR 3, an ASBR 4, and an ASBR 5, where the ASBR 1 is the second network device. A BGP connection is established between the ASBR 1 and AS2, a BGP connection is established between the ASBR 2 and AS4, a BGP connection is established between the ASBR 3 and AS5, a BGP connection is established between the ASBR 4 and AS6, and a BGP connection is established between the ASBR 5 and AS7. After receiving the validation information and the neighbor AS that are sent by AS1, the ASBR 1 forwards the validation information and the neighbor AS to other ASBRs.

That the second network device obtains the validation entry based on the validation information and the neighbor AS may include: The second network device obtains an AS to which a third network device communicating with an interface belongs. If the AS to which the third network device belongs is the neighbor AS, the second network device determines that the interface is the incoming interface. The second network device obtains the validation entry based on the validation information and the incoming interface. In other words, the second network device determines a network device connected to each interface corresponding to the second network device, and obtains an AS to which the network device belongs. If the AS is the neighbor AS, an interface connected to the network device is the incoming interface.

In a possible implementation of receiving the validation information and the neighbor AS, the second network device receives the second packet from the second network device. The second network device parses the second packet, to obtain the identifier of the first AS (the identifier of the first AS is a specific example of the validation information) and the identifier of the neighbor AS of the second AS that are carried in the second packet.

In a possible implementation, before obtaining the validation entry, the second network device further performs a step of checking validity of a packet based on a sequence number. For example, the second packet includes the sequence number. After the second network device receives the second packet, the second network device obtains the sequence number carried in the second packet, and checks validity of the second packet based on the sequence number in the second packet. For example, the second network device compares the sequence number in the second packet with a sequence number locally recorded in the second network device. If the sequence number in the second packet is greater than the sequence number locally recorded in the second network device, the second network device determines that the second packet is valid, and the second network device further performs the step of obtaining the validation entry based on the validation information and the neighbor AS. Optionally, the second network device further forwards the second packet to a boundary network device in the second AS. If the sequence number in the second packet is less than or equal to the sequence number locally recorded in the second network device, it indicates that the second packet is not the latest, and the second network device determines that the second packet is invalid. In this case, the second network device discards the second packet, and does not need to further perform the step of obtaining the validation entry based on the validation information and the neighbor AS, and does not need to further perform a step of forwarding the second packet to a boundary network device in the second AS. Because checking the validity of the second packet based on the sequence number in the second packet is equivalent to that the second network device advertises the neighbor AS in the second packet to the second network device only when determining that the second packet is a latest DPP packet, the neighbor AS advertised by the second network device has time validity. In this way, a risk that a validation entry is inaccurate or even a packet is incorrectly discarded because the validation entry is obtained by the second network device based on an expired neighbor AS is reduced.

Optionally, if the sequence number in the second packet is greater than the sequence number locally recorded in the second network device, the second network device updates the locally recorded sequence number to the sequence number in the second packet, to maintain time validity of the locally recorded sequence number, so that validity of a packet is checked when the packet that carries the neighbor AS and a sequence number is received next time.

For implementation details of comparing sequence numbers by the second network device, to distinguish different sequence numbers, the following uses the "third sequence number" to describe the sequence number carried in the packet sent by the first network device to the second network device, and uses the "fourth sequence number" to describe the sequence number locally recorded in the second network device. In a possible implementation, the second packet further includes the third sequence number. Optionally, the second packet further includes the identifier of the first AS and the identifier of the first network device. After the second network device receives the second packet, the second network device obtains the identifier of the first AS, the identifier of the first network device, and the third sequence number that are carried in the second packet. The second network device obtains the fourth sequence number based on the identifier of the first AS, the identifier of the first network device, and a second correspondence. The second correspondence includes the identifier of the first AS, the identifier of the first network device, and the fourth sequence number. The second network device may search the second correspondence by using the identifier of the first AS and the identifier of the first network device as an index (key), to obtain the fourth sequence number. The second network device compares the third sequence number carried in the packet with the fourth sequence number obtained from the second correspondence.

For a source of the second correspondence on the second network device, in a possible implementation, when the second network device receives a packet that includes the origin sequence number, the identifier of the first AS, and the identifier of the first network device, the second network device establishes the second correspondence based on the identifier of the first AS and the identifier of the first network device that are in the packet in response to the packet that includes the origin sequence number. The second correspondence includes the origin sequence number, the identifier of the first AS, and the identifier of the first network device. After a first packet that includes a sequence number, the identifier of the first AS, the identifier of the first network device, and the neighbor AS is subsequently received, if the sequence number in the first packet is greater than the origin sequence number, the second network device updates the origin sequence number in the second correspondence to the sequence number in the first packet, to maintain the time validity of the locally recorded sequence number. By analogy, each time the second network device subsequently receives a packet that includes a sequence number, the identifier of the first AS, the identifier of the first network device, and the neighbor AS, if the sequence number in the received packet is greater than the sequence number in the second correspondence, the sequence number in the second correspondence is updated to the sequence number in the received packet.

In a possible implementation, based on the sequence number in the second packet being the origin sequence number, the second network device does not need to perform the step of comparing the sequence number in the packet with the locally recorded sequence number, and obtains the validation entry based on the validation information and the neighbor AS that are in the second packet.

In a possible implementation, after the second network device receives the second packet, the second network device sends the second packet to the boundary network device in the second AS, to transfer the identifier of the first AS and the identifier of the neighbor AS to the boundary network device in the second AS by using the second packet. In a possible implementation, in a process in which the second network device forwards the second packet, the second network device does not need to modify the sequence number in the second packet. In other words, the sequence number in the second packet sent by the second network device to the boundary network device in the second AS is the same as the sequence number in the second packet received by the second network device from the first network device. After the boundary network device in the second AS receives the second packet from the second network device, the boundary network device in the second AS may check the validity of the second packet based on the sequence number in the second packet. When the check succeeds, the boundary network device in the second AS generates the validation entry based on the identifier of the first AS and the identifier of the neighbor AS that are in the second packet, and updates the locally recorded sequence number to the sequence number in the second packet. For a manner in which the boundary network device in the second AS performs sequence number-based validation, refer to a manner in which the second network device performs sequence number-based validation.

In a possible implementation, that the second network device obtains the AS to which the third network device communicating with the interface belongs includes: The second network device obtains, based on configuration information on the interface, the AS to which the connected third network device belongs. The configuration information includes the AS to which the third network device connected to the interface belongs. In other words, an AS identifier of the AS to which the third network device communicating with the interface belongs may be configured on the interface, and the second network device determines, based on the foregoing configuration, the AS to which the third network device communicating with the interface belongs. Alternatively, the second network device determines a third network device that establishes an external border gateway protocol (external border gateway protocol, EBGP) peer relationship with the interface. The second network device obtains an AS to which the third network device belongs.

That the second network device obtains the validation entry based on the validation information and the incoming interface includes:
If the validation information includes the source prefix, the second network device establishes a correspondence between the incoming interface and the source prefix, to obtain the validation entry. In other words, if the validation information includes the source prefix that needs validation, the second network device may obtain the validation entry based on the incoming interface and the source prefix.

If the validation information includes the identifier of the first AS, the second network device obtains the source prefix based on the identifier of the first AS and a correspondence. The second network device obtains the validation entry based on the source prefix and the incoming interface. The correspondence includes the AS identifier of the first AS and the source prefix. Specifically, the correspondence may be preconfigured on the second network device. Alternatively, after determining a source prefix that needs source address validation, the first network device sends, to the second network device, the correspondence including the AS identifier of the first AS and the source prefix.

After obtaining the validation entry, the second network device may perform source address validation on a received service packet. Specifically, the second network device receives the service packet, where the service packet includes a source IP address. The second network device determines validity of the service packet based on the validation entry, the source IP address, and an interface that receives the service packet. In other words, after receiving the service packet, the second network device obtains the source IP address by parsing the service packet, and obtains a source prefix by analyzing the source IP address. After the source prefix corresponding to the service packet is obtained, an incoming interface corresponding to the source prefix is searched for in the validation entry. The second network device determines, based on the interface that receives the service packet and the found incoming interface, that the service packet is valid. After determining that the service packet is the valid packet, the second network device may forward the service packet.

It can be learned from the foregoing descriptions that a source address validation mode includes an allowlist validation mode and a graylist validation mode, and validation results obtained by the second network device may be different in different validation modes. For example, if a validation mode configured by the second network device is the allowlist validation mode, if the validation entry includes the source prefix corresponding to the service packet and the interface that receives the service packet matches the found incoming interface, the service packet is a valid packet; if the validation entry includes the source prefix corresponding to the service packet but the interface that receives the service packet does not match the found incoming interface, the service packet is an invalid packet; or if the validation entry does not include the source prefix corresponding to the service packet, the service packet is an invalid packet. If a validation mode configured by the second network device is the graylist validation mode, if the validation entry includes the source prefix corresponding to the service packet and the interface that receives the service packet matches the found incoming interface, the service packet is a valid packet; if the validation entry includes the source prefix corresponding to the service packet but the interface that receives the service packet does not match the found incoming interface, the service packet is an invalid packet; or if the validation entry does not include the source prefix corresponding to the service packet, the service packet is a valid packet.

It can be learned that the first network device in the first AS serving as the origin AS obtains the validation information corresponding to the first AS and the neighbor AS corresponding to the second AS used for validation. The neighbor AS is the previous-hop AS of the second AS in the direction from the first AS to the second AS. The first network device sends the validation information and the neighbor AS to the second AS, and a validation AS performs validation on a source address of the received service packet based on the validation information and the neighbor AS. In other words, in this application, the first AS may send, to the validation AS, the validation information and the neighbor AS corresponding to the validation AS, and does not need to send the validation information to all ASs on a path with the first AS as an origin AS, to reduce communication overheads.

It can be learned from the foregoing descriptions that the first network device may be the controller, the RR, or the boundary network device in the first AS, the second network device may be the controller, the RR, or the boundary network device in the first AS, and a representation form of the first network device and a representation form of the second network device may be any combination. For ease of understanding technical implementation of this application, the following separately uses an example in which both the first network device and the second network device are boundary network devices, and an example in which both the first network device and the second network device are controllers for description.

In a first scenario, both the first network device and the second network device are boundary network devices.

In this scenario, a BGP peer relationship is established between a boundary network device in the first AS and a boundary network device in the second AS, and the boundary network device in the first AS advertises the neighbor AS to the boundary network device in the second AS by sending a DPP protocol packet, so that the boundary network device in the second AS generates an SAV table based on the neighbor AS. For ease of understanding, the following uses an example in which the boundary network device is an ASBR for description.

For example, when the first AS includes a plurality of boundary network devices, to prevent each boundary network device in the first AS from sending a SPA packet and a DPP packet to the second network device, and reduce communication overheads, one boundary network device, that is, the first network device, may be selected from the plurality of boundary network devices as a DR through manual configuration or according to a selection rule. Similarly, when the second AS includes a plurality of boundary network devices, one boundary network device, that is, the second network device, may also be selected from the plurality of boundary network devices as a DR by manual configuration or according to a selection rule. Based on this, an eBGP peer relationship may be established between the first network device and the second network device. Specifically, the AS identifier of the second AS and the address of the second network device may be configured on the first network device, and the AS identifier of the first AS and an address of the first network device may be configured on the second network device, so that the first network device and the second network device can communicate with each other.

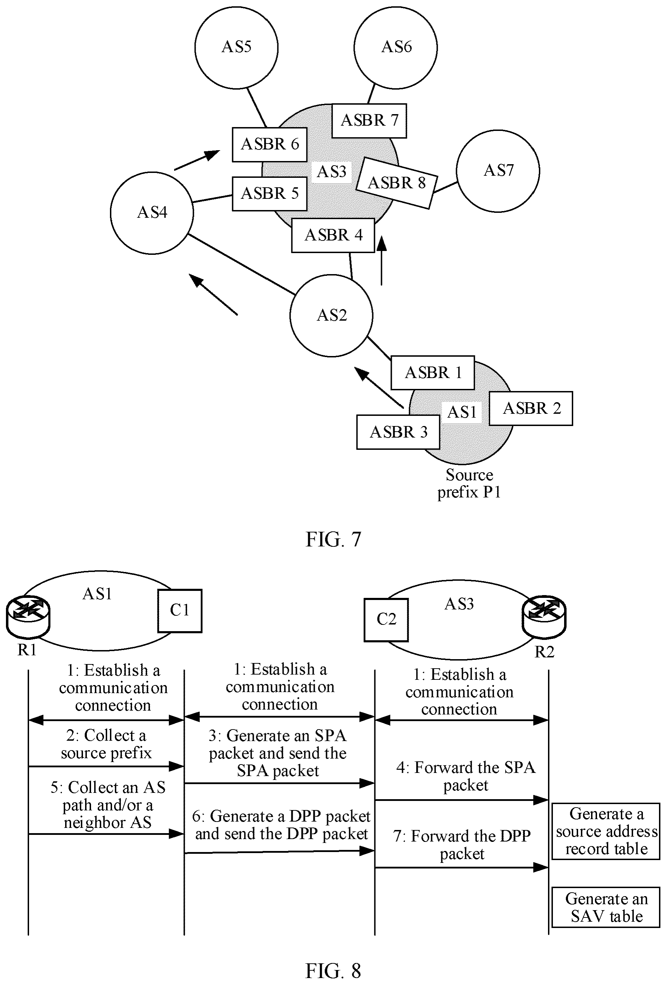

For example, as shown in FIG. 7, AS1 is the first AS, and an AS is the second AS. AS 1 includes three boundary network devices: an ASBR 1, an ASBR 2, and an ASBR 3. The AS3 includes five boundary network devices: an ASBR 4 to an ASBR 8. The ASBR 1 and the ASBR 4 are both selected as DRs. In other words, the first network device is the ASBR 1, and the second network device is the ASBR 4.

A specific interaction process is described in the following.
(1) The ASBR 1 collects the source prefix in the first AS, generates a SPA protocol packet, and sends the SPA protocol packet to the second network device. The SPA protocol packet includes the AS identifier of the first AS and the source prefix. Specifically, a source prefix that needs source address validation may be preconfigured on the ASBR 1, or the ASBR 1 determines, as the source prefix, an IP address prefix in a route corresponding to an AS_path whose first-hop AS is the first AS.
(2) After receiving the SPA protocol packet, the ASBR 4 forwards the SPA protocol packet to other boundary network devices, so that each boundary network device in the second AS can receive the SPA protocol packet sent by the ASBR 1, and generate a source address record table as shown in Table 2.
(3) The boundary network device in the first AS collects all AS paths for forwarding local domain traffic, and determines, based on the collected AS paths, the neighbor AS corresponding to the second AS. The AS paths collected by the boundary network device come from an AS_path attribute (including a standby path such as FRR) that is advertised by a BGP route and that is in a local routing table, or come from an AS path after inter-domain traffic redirection.
(4) Boundary network devices send neighbor ASs corresponding to the second AS to the ASBR 1. In other words, the ASBR 1 integrates the neighbor ASs sent by the boundary network devices.

For example, the boundary network device generates a DPP protocol packet of the first type (for example, a DPP protocol packet whose type is 1 shown in FIG. 4) based on the second AS and the neighbor AS, and sends the DPP protocol packet of the first type to the ASBR 1.

In a possible implementation, neighbor ASs integrated by the ASBR 1 include a neighbor AS that is sent by each boundary network device by using a DPP protocol packet of the first type, a neighbor AS that is obtained by the ASBR 1 by using an AS path, and a neighbor AS that is obtained by the ASBR 1 by using an AS topology base.

(5) The ASBR 1 generates a DPP protocol packet based on the integrated neighbor ASs, and sends the DPP protocol packet to the ASBR 4. The DPP protocol packet includes the AS number identifier of the first AS, the AS identifier of the second AS, and a neighbor AS list. For example, in the application scenario shown in FIG. 7, the DPP protocol packet includes AS1 (an AS identifier of the origin AS), AS3 (an AS identifier of the validation AS), and the neighbor AS list [AS2, and AS4].

In a possible implementation, the ASBR 1 receives the DPP protocol packet of the first type from the boundary network device. The ASBR 1 checks validity of the packet. When the packet validity check succeeds, the ASBR 1 generates a DPP protocol packet of the second type (for example, the DPP protocol packet whose type is 2 shown in FIG. 5) based on the integrated neighbor ASs and the identifier (source AS number) of the first AS, and sends the DPP protocol packet of the second type to the ASBR 4.

The step of checking the validity of the packet by the ASBR 1 includes: checking that the DPP protocol packet of the first type is from an IBGP peer of the ASBR 1 and that a sequence number in the DPP protocol packet of the first type is greater than a sequence number in the correspondence locally stored in the ASBR 1.

(6) After receiving the DPP protocol packet, the ASBR 4 diffuses the DPP protocol packet to another boundary network device in the second AS.

In a possible implementation, the ASBR 4 receives the DPP protocol packet of the second type, and the ASBR 4 searches a correspondence based on an origin router identifier and a source AS in the DPP protocol packet of the second type, to obtain a sequence number. If the sequence number in the DPP protocol packet of the second type is greater than the sequence number obtained from the correspondence, the ASBR 4 performs a step of generating an SAV table in (7), and sends the DPP protocol packet of the second type to the another boundary network device in the second AS. In addition, the ASBR 4 updates the sequence number in the correspondence based on the sequence number in the DPP protocol packet of the second type.

If the sequence number in the DPP protocol packet of the second type is less than or equal to the sequence number obtained from the correspondence, the ASBR 4 cancels performing the step of generating the SAV table in (7), and does not need to send the DPP protocol packet of the second type to the another boundary network device in the second AS.

(7) The ASBR 4 or the another boundary network device in the second AS receives the DPP protocol packet, and generates the SAV table. When generating the SAV table based on the DPP protocol packet, the ASBR 4 searches the source address record table based on an origin AS number in the DPP protocol packet to determine the source prefix that needs validation. The ASBR 4 checks the neighbor AS list. If the ASBR 4 uses a directly connected interface (physical interface) to establish an eBGP peer relationship with a neighbor AS, the ASBR 4 may determine that the physical interface connected to the neighbor AS is a valid incoming interface. If the ASBR 4 establishes an eBGP peer relationship with a neighbor AS through a loopback interface, the second network device determines, as a physical interface for communicating with the neighbor AS, an outgoing interface obtained through route iteration to the neighbor AS, and determines the physical interface as a valid incoming interface.

It should be noted that, in this embodiment, when the ASBR 4 forwards the SPA protocol packet and the DPP protocol packet to another boundary network device, an intermediate forwarding device that cannot identify the protocol packets forwards the protocol packets as common BGP packets, and does not process the protocol packets.

In a second scenario, both the first network device and the second network device are controllers.

In this scenario, a controller in the first AS communicates with a controller in the second AS, performs transmission of a SPA protocol packet and a DPP protocol packet, and forwards the protocol packets to a boundary network device in the second AS, to generate an SAV table. For example, in the application scenario shown in FIG. 8, AS1 is the first AS, and includes a boundary network device R1 and a controller C1; and AS3 is the second AS, and includes a boundary network device R2 and a controller C2.

A specific interaction process is shown in the following.
(1) Establish a communication connection. For example, the controller C1 of AS1 establishes a connection to the boundary network device R1 of AS1; the controller C2 of AS3 establishes a connection to the boundary network device R2 of AS2; and a transmission control protocol (transmission control protocol, TCP) connection may be established between the controller C1 of AS1 and the controller C2 of AS3, to perform transmission of a protocol packet. The controller C1 may communicate with the border routing device R1 by using protocols such as BGP and a BGP monitoring protocol (BGP monitoring protocol, BMP). The controller C2 may also communicate with the border routing device R2 by using protocols such as BGP and BMP.
(2) The controller C1 collects the source prefix in AS1. For example, the controller C1 may collect the source prefix in AS1 in the following manners: In one manner, the source prefix is added to the controller C1 through manual configuration. In another manner, the controller C1 collects a BGP route of a boundary network device in AS1, and determines the source prefix based on a route with AS1 as an origin AS.
(3) The controller C1 constructs a SPA protocol packet and sends the SPA protocol packet to the controller C2. The SPA protocol packet includes the AS identifier of the first AS and the corresponding source prefix.
(4) The controller C2 synchronizes the SPA protocol packet to the boundary network device R2, so that the boundary network device R2 generates a source address record table.
(5) The controller C2 collects all AS paths of local domain traffic, and determines, based on the AS paths, a neighbor AS list corresponding to the second AS; or receives a neighbor AS list sent by each boundary network device.
(6) The controller C1 constructs a DPP protocol packet and sends the DPP protocol packet to the controller C2. The DPP protocol packet includes the AS identifier of the first AS, the AS identifier of the second AS, and the AS identifier of the neighbor AS.
(7) The controller C2 synchronizes the DPP protocol packet to all boundary network devices in the second AS, so that each boundary network device generates an SAV table.

It should be noted that, when the first network device is a boundary network device, and the second network device is a controller or an RR; when the first network device is an RR, and the second network device is a boundary network device, a controller, or an RR; or when the first network device is a controller, and the second network device is a boundary network device or an RR, for specific implementation of sending the validation information and the neighbor AS to the second network device by the first network device, refer to the embodiment shown in FIG. 3, FIG. 7, or FIG. 8. Details are not described herein again in this embodiment.

### Advertisement of a hidden AS

A scenario of advertising the hidden AS involves a source AS, a validation AS, and an intermediate AS located between the source AS and the validation AS. To distinguish between different ASs, in the following examples, an "AS A" is used to describe the source AS, a "network device A" is used to describe a network device deployed at a boundary of the AS A, an "AS B" is used to describe the intermediate AS, a "network device B" is used to describe a network device deployed at a boundary of the AS B, an "AS C" is used to describe the validation AS, and a "network device C" is used to describe a network device deployed at a boundary of the AS C. The network device A is, for example, an egress device of the AS A. The network device B is, for example, an ingress device or an egress device of the AS B. The network device C is, for example, an ingress device of the AS C. The AS A is a customer AS (customer AS) of the AS B, and the AS B is a customer AS of the AS C.

To facilitate understanding of the solution, the following first describes, by using examples, basic terms, concepts, and application scenarios related to source address validation and the advertisement of the hidden AS.

Enhanced feasible path-unicast reverse path forwarding EFP-uRPF (enhanced feasible path-unicast reverse path forwarding, EFP-uRPF) is a technology used for inter-domain source address validation. There are two algorithms in the EFP-uRPF: an algorithm A and an algorithm B. The algorithm A and the algorithm B both aim to generate a prefix allowlist on a customer interface or on a peer interface.

The prefix allowlist is a validation entry (SAV table), also referred to as a validation rule, or an RFP list. The prefix allowlist is used to store a valid source prefix or source address, and the source prefix is, for example, a prefix of an IP address in the source AS. A source IP address is, for example, the IP address in the source AS. The prefix allowlist corresponds to an interface. For example, when a packet reaches an interface of a network device, the network device determines whether a source address of the packet is in the prefix allowlist or whether a source address of the packet is covered by at least one prefix in the prefix allowlist. If the source address of the packet is in the prefix allowlist or the source address of the packet is covered by at least one prefix in the prefix allowlist, the network device determines that the packet is a valid packet. If the source address of the packet is not in the prefix allowlist and the source address of the packet is not covered by any prefix in the prefix allowlist, the network device determines that the packet is an invalid packet.

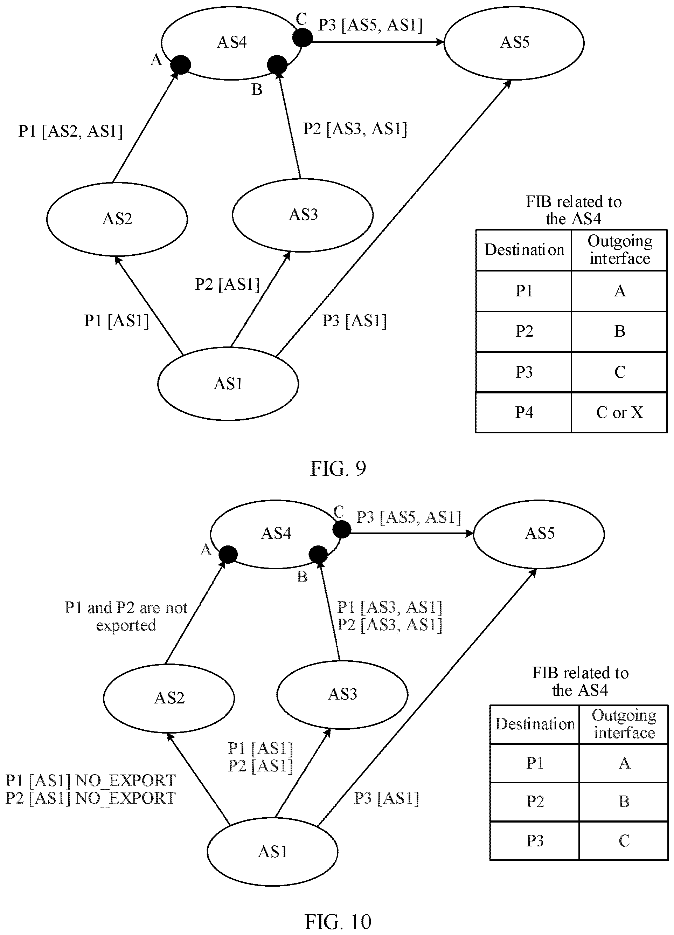

Provider AS and customer AS: The provider AS and the customer AS are two roles of an AS and indicate a relationship between a pair of neighbor ASs. In two neighbor ASs, if one AS is a provider AS, the other AS is a customer AS. The provider AS provides a service for the customer AS to connect to an upstream internet. The provider AS can determine, based on a route sent by the customer AS, specific traffic that should be sent to a specific customer AS. In a traffic forwarding process, the customer AS is usually located downstream of the provider AS. The customer AS may select the provider AS as a next hop to forward traffic to a destination via the provider AS. The scenario shown in FIG. 9 is used as an example. AS4 is a provider AS of AS2 and AS3, and AS4 is configured to provide an internet connection service for AS2 and AS3. The AS2 is a provider AS of AS1. In other words, AS1 is a customer AS of AS2, and AS2 is a customer AS of AS4.

Peer AS: The peer AS is a role of an AS and indicates a relationship between a pair of neighbor ASs. In two neighbor ASs, if one AS is a peer AS, the other AS is a peer AS. The peer AS can exchange traffic of the AS and traffic of a customer AS of the AS, but does not provide a service for each other to connect to an upstream internet.

Origin prefix: The origin prefix is an IP address block in an autonomous system (AS). The AS can apply for an IP address block from some international organizations, and allocate the obtained IP address block to a network device deployed in the AS or a terminal or a server accessed by a network device. An AS advertises an IP address block in the AS to another AS. When the another AS intends to communicate with a device associated with the IP address block, the another AS initiates a data flow by using an IP address in the IP address block as a destination IP address, so that the data flow is forwarded to the AS through IP routing. For example, in the scenario shown in FIG. 9, AS1 advertises a prefix P1, a prefix P2, and a prefix P3, for AS4 to initiate a data flow by using the prefix P1, the prefix P2, or the prefix P3 as a prefix of a destination IP address. The prefix P1, the prefix P2, and the prefix P3 are specific examples of the origin prefix.

Customer cone (customer cone, also referred to as a customer group): The customer cone includes a plurality of downstream ASs of an AS. A customer cone includes a set of all customer ASs directly connected to an AS and all customer ASs indirectly connected to the AS. The scenario shown in FIG. 9 is used as an example. A customer cone of AS4 includes AS2, AS3, and AS1.

A no-export (no-export) attribute is a BGP path attribute. The no-export attribute is used to control a distribution range of a route. When an AS advertises a route with a no-export attribute to neighbor ASs of the AS, the route is not further forwarded to other neighbor ASs by the neighbor ASs. In other words, the no-export attribute limits a route transmission range. For example, if AS1 has a route with an address 10.0.0.0/24, the route has a no-export attribute. When AS1 advertises the route to the neighbor AS2, AS2 determines that the route cannot be further advertised by the AS to another neighbor AS based on the no-export attribute. In this way, the route is shared only between AS1 and AS2, and is not further exported to a wider network range.

AS identifier: The AS identifier is a parameter that identifies an AS. For example, the AS identifier is an AS number.

FIG. 9 is a diagram of an application scenario according to an embodiment of this application. In the scenario shown in FIG. 9, a route advertisement situation is that AS4 receives routes originating from AS1 from three directions: AS2, AS3, and AS5.

Specifically, AS1 sends a protocol packet A to AS2, where the protocol packet A includes the address prefix P1 and an AS_path attribute, and the AS_path attribute includes an AS number of AS1. Content of the protocol packet A is simplified as P1 [AS1] below. The AS2 receives the protocol packet A from AS1, and AS2 can learn, based on P1 [AS1], that if AS2 needs to access an IP address including the prefix P1, AS2 may send a data packet to AS1, and a network device in AS1 forwards the data packet to a terminal or a server corresponding to the prefix P1. The AS2 adds an AS number of AS2 to the AS_path attribute of the protocol packet A, to obtain a protocol packet B. The protocol packet B includes the prefix P1 and an AS_path attribute, and the AS_path attribute includes the AS number of AS1 and the AS number of AS2. Content of the protocol packet B is simplified as P1 [AS2, AS1] below. The AS4 receives the protocol packet B from AS2 through an interface A, and AS4 can learn, based on P1 [AS2, AS1], that if AS4 needs to access an IP address including the prefix P1, AS4 may send a data packet to AS2, and AS2 further forwards the data packet to AS1. In this way, AS4 receives an advertisement originating from AS1 for the prefix P1. Similarly, AS1 sends the prefix P2 and an AS_path attribute [AS1] to AS3, AS3 adds an AS number of AS3 to the AS_path attribute [AS1], AS3 sends the prefix P2 and an AS_path attribute [AS3, AS1] to AS4, and AS4 receives the prefix P2 and the AS_path attribute [AS3, AS1] through an interface B, so that AS4 receives, from AS3, an advertisement originating from AS1 for the prefix P2. Similarly, AS1 sends the prefix P3 and the AS_path attribute [AS1] to AS5, AS5 adds an AS number of AS5 to the AS_path attribute [AS1], AS5 sends the prefix P3 and an AS_path attribute [AS5, AS1] to AS4, and AS5 receives the prefix P3 and the AS_path attribute [AS5, AS1] through an interface C, so that AS4 receives, from AS5, an advertisement originating from AS1 for the prefix P3. A route advertisement that is not described in the figure is performed according to a common rule. For example, a provider AS advertises all routes to a customer AS.

As shown in the scenario shown in FIG. 9, in a process of transferring an AS_path attribute via each AS, an AS number of each AS that the AS_path attribute passes through is added to the AS_path attribute. Each AS may add the AS number of the AS to a received AS_path attribute in a process of transferring the AS_path attribute, and send, to an upstream AS, an AS_path attribute including the AS number of the AS and an AS number of a downstream AS of the AS.

A traffic direction of AS4 is as follows: For southbound traffic, an outgoing interface of traffic whose destination IP address includes the prefix P1 is the interface A, an outgoing interface of traffic whose destination IP address includes the prefix P2 is the interface B, and an outgoing interface of traffic whose destination IP address includes the prefix P3 is the interface C. For northbound traffic, any of the interface A, the interface B, and the interface C may receive any packet whose source IP address includes the prefix P1, the prefix P2, or the prefix P3.

The EFP-uRPF algorithm A is used to obtain all origin prefixes in a customer cone and all customer interfaces corresponding to all customer ASs in the customer cone, to generate a prefix allowlist. For example, AS4 obtains, by using the EFP-uRPF algorithm A, a correspondence between the prefix P1 and the interface A receiving the prefix P1, a correspondence between the prefix P2 and the interface B receiving the prefix P2, and a correspondence between the prefix P3 and the interface C receiving the prefix P3. For example, the EFP-uRPF algorithm A includes step 1 to step 4.

Step 1: Obtain a customer cone. Specifically, the validation AS determines an AS number received by a customer interface of the validation AS, to obtain a customer cone connected to the customer interface of the validation AS. For example, AS4 determines that a customer interface A receives the AS number of AS1 and the AS number of AS2, and AS4 determines that a customer interface B receives the AS number of AS1 and the AS number of AS3, to construct a customer cone connected to the customer interface A and a customer cone connected to the customer interface B. The customer cone connected to the customer interface A includes AS1 and AS2, and the customer cone connected to the customer interface B includes AS1 and AS3.

Step 2: Obtain an origin prefix set. Specifically, the validation AS determines, based on an AS number of each AS in the customer cone, an origin prefix corresponding to each AS in the customer cone, to obtain the origin prefix set. For example, the validation AS uses the AS number of each AS in the customer cone as an index to search an Adj-RIBs-In base, to obtain the origin prefix that corresponds to each AS and that is stored in the Adj-RIBs-In base. Adj-RIBs-in is a routing information base (routing information base) input in a neighboring relationship in a connection state, and may be understood as a database used to store routes advertised by using a BGP protocol. Adj-RIBs-In includes a transit (transit) interface, a customer (customer) interface, and a lateral peer (peer) interface.

For example, AS4 searches Adj-RIBs-In based on the AS number of AS1, to obtain an origin prefix corresponding to AS1, AS4 searches Adj-RIBs-In based on the AS number of AS2, to obtain an origin prefix corresponding to AS2, and AS4 searches Adj-RIBs-In based on the AS number of AS3, to obtain an origin prefix corresponding to AS3.

Step 3: Generate the prefix allowlist. Specifically, the validation AS generates the prefix allowlist based on the customer interface and the origin prefix set, for example, constructs an RFP list for the customer interface of AS1. The origin prefix of AS1 is allowed to enter through any customer interface (any customer interface that receives a route advertisement of AS1).

Step 4: Repeat steps 2 and 3 to traverse a customer AS set.

Scenario constraint of the algorithm A: Each interface of a network device at each incoming of the validation AS is required to receive at least one AS number advertised by an AS in the customer cone. For a stub AS in the customer cone, the stub AS needs to advertise at least one AS number of the AS to each transit provider AS. The intermediate AS needs to advertise at least one received customer route to all transit providers in the intermediate AS. For example, in the scenario shown in FIG. 10, a stub AS is, for example, AS1, and a transit provider AS of AS1 is, for example, AS2 and AS3. AS4 determines routes that are advertised by specific origin ASs and that are separately received by each interface. For example, if routes received by an interface A are from AS1 and AS2, AS4 determines an origin prefix in AS1 and an origin prefix in AS2 based on routing information from various directions, and AS4 adds the origin prefix in AS1 and the origin prefix in AS2 to an allowlist of the interface A. If AS1 has not sent a prefix in AS1 to the interface A of AS4 in a historical time period, the interface A of AS4 cannot sense existence of AS1. As a result, the prefix allowlist generated by AS4 cannot include the prefix of AS1. Because AS1 is a customer AS of AS4, AS1 has a requirement for accessing an internet via AS4, and AS1 sends a data flow to AS4, but the prefix of AS1 does not exist in the prefix allowlist generated by AS4. As a result, transmission of the data flow of AS1 cannot be successfully performed.

As shown in FIG. 10, because an address prefix sent by AS1 to AS2 carries a no-export attribute, after AS2 receives the address prefix from AS1, AS2 does not further advertise the address prefix from AS1 to AS4 based on the no-export attribute. As a result, the interface A of AS4 does not receive any origin prefix advertisement from AS1. The prefix allowlist of AS4 on the interface A does not include a prefix P1. When a valid packet whose source address includes the prefix P1 and that is generated by AS1 reaches the interface A of AS4 via AS2, AS4 searches the prefix allowlist based on the source address, and AS4 determines that the prefix P1 does not exist in the prefix allowlist. In this case, AS4 incorrectly determines that the packet from AS1 is an invalid packet, and discards the packet from AS 1.

The EFP-uRPF algorithm B is used to resolve a limitation in a scenario in which the EFP-uRPF algorithm A requires that each interface of the network device at each incoming of the validation AS receives at least one prefix advertisement of the AS in the customer cone. The EFP-uRPF algorithm B is used to find all origin prefixes of a customer AS in all directions as much as possible, and it is assumed that these prefixes are valid when entering through any customer interface. In addition, for the EFP-uRPF algorithm B, an obtained customer cone is based on an AS instead of an interface. The algorithm B is equivalent to combining cones connected to all customer interfaces in the algorithm A to obtain the customer cone.

The EFP-uRPF algorithm B includes the following steps 1 to 5.

Step 1: The validation AS determines all directly connected customer interfaces regardless of whether the customer interfaces receive an advertised route, to obtain a customer interface set. For example, in the scenario shown in FIG. 10, AS4 determines the interface A and an interface B.

Step 2: The validation AS determines, from Adj-RIBs-In, origin prefixes corresponding to the customer interfaces, to obtain a set of prefixes of the customer interfaces. For example, in the scenario shown in FIG. 10, AS4 determines the prefix P1 and a prefix P2.

Step 3: The validation AS determines, from Adj-RIBs-In origin ASs corresponding to the customer interfaces, to obtain a set of origin ASs of the customer interfaces. For example, in the scenario shown in FIG. 10, AS4 determines AS1.

Step 4: The validation AS determines, from Adj-RIBs-In, all prefixes related to corresponding origin ASs in directions of transit and peer interfaces, to obtain a set of prefixes of the origin ASs. For example, AS4 determines a prefix P3 from a direction of a peer interface.

Step 5: The validation AS combines the prefixes obtained in step 2 and the prefixes obtained in step 4 to obtain a prefix allowlist associated with the customer interfaces. For example, the prefix allowlist obtained by the validation AS includes a correspondence between the prefix P1, the prefix P2, the prefix P3 and the interface A and the interface B.

When the EFP-uRPF algorithm B is used, the prefix allowlist may include an interface unreachable prefix because source prefixes in the customer cone cover a wide range of interfaces. As a result, monitoring or route control is loose. For example, the interface A of AS4 receives no AS number of AS1, but the interface B of AS4 receives the AS number of AS1. Both the interface A and the interface B are customer interfaces of AS4. Therefore, AS4 integrates an AS number received by the interface A and an AS number received by the interface B. This is equivalent to using the AS number that is of AS1 and that is received by the interface B as content of the prefix allowlist of the interface A. In this way, the prefix allowlist of the interface A includes the AS number of AS1, the prefix P1, the prefix P2, and the prefix P3. In addition, if a prefix sent by the source AS to an upstream AS carries a no-export attribute, it is also possible that each customer interface of the validation AS cannot receive an AS number of the source AS. In this case, the validation AS still cannot sense existence of the source AS. For example, as shown in FIG. 10, if a prefix sent by AS1 to AS2 carries a no-export attribute, and a prefix sent by AS1 to AS3 also carries a no-export attribute, AS2 does not advertise the AS number of AS1 and the prefix of AS 1 to AS4, and AS3 does not advertise the AS number of AS1 and the prefix of AS1 to AS4. In this case, AS4 cannot receive the AS number of AS1 from either the interface A or the interface B. As a result, AS1 becomes a hidden AS of AS4. In addition, source address spoofing exists in the customer cone.

For example, there is a case in which a member in the customer cone pretends to be another member in the customer cone, a source address of traffic that flows out of the cone can be ensured to be originating from the cone, but spoofing between members cannot be ensured. As shown in FIG. 10, AS2 sends, to AS4, a packet whose source address includes a prefix originating from AS3. In this case, AS4 cannot intercept forged traffic on the interface A.

For a problem that the source AS becomes a hidden AS because neither the EFP-uRPF algorithm A nor the EFP-uRPF algorithm B can support the validation AS in sensing the source AS, some implementations of this application provide a manner of advertising the hidden AS. The hidden AS is, for example, an AS that can be sensed by the intermediate AS but is not advertised to the validation AS in the historical time period. The hidden AS is a customer AS that is of the validation AS and that is in the customer cone.

Manners of advertising the hidden AS include a hop-by-hop advertisement manner and a point-to-point advertisement manner.

In the point-to-point manner of advertising the hidden AS, for example, the source AS directly advertises the AS number of the AS to the validation AS, for example, AS1 advertises the AS number of AS1 to AS4, so that AS4 can sense the existence of AS1. In some other implementations of this application, the intermediate AS helps the source AS advertise the AS number of the source AS to the validation AS in the hop-by-hop manner of advertising the hidden AS. In some implementations of determining the validation AS by the intermediate AS, the intermediate AS records all AS numbers received by the intermediate AS in the historical time period and an AS number of the intermediate AS, to obtain a first AS set, where the first AS set includes all the AS numbers received by the intermediate AS and the AS number of the intermediate AS. The intermediate AS records all AS numbers advertised by the intermediate AS to a neighbor AS in the historical time period, to obtain a second AS set. The intermediate AS compares the first AS set with the second AS set, to obtain an AS number that is included in the first AS set but not included in the second AS set. The AS number that is included in the first AS set but not included in the second AS set is equivalent to an AS number that is in the historically received AS numbers and that is not in the AS numbers historically advertised to the neighbor AS, and may be understood as an AS number of an AS that is not advertised. The intermediate AS determines, as a hidden AS, the AS number that is included in the first AS set but not included in the second AS set. The intermediate AS sends the hidden AS to the neighbor AS of the intermediate AS, and a validation AS can sense existence of the hidden AS.

For example, AS2 records each AS number included in an AS_path attribute received by AS2 from AS1 in the historical time period, to obtain the first AS set. The AS2 records each AS number included in an AS_path attribute sent by AS2 to AS4 in the historical time period, to obtain the second AS set. The AS2 compares the first AS set with the second AS set, and AS2 determines that the first AS set includes the AS number of AS1 and the second AS set does not include the AS number of AS1, to identify that AS1 is the hidden AS. Therefore, AS2 advertises the AS number of AS1 to AS4, so that AS4 can sense the existence of AS1.

In the hop-by-hop manner of advertising the hidden AS, for example, the intermediate AS advertises the AS number of the source AS to the hidden AS. The scenario shown in FIG. 10 is used as an example. AS1 sends the AS number of AS1 to AS2. After AS2 receives the AS number from AS1, AS2 further sends the AS number of AS1 to AS4, so that the AS number of AS1 is transferred to AS4 via AS1 and AS2 in sequence. In the point-to-point manner of advertising the hidden AS, for example, the source AS is responsible for advertising the AS number of the source AS to the validation AS. The scenario shown in FIG. 10 is used as an example. AS1 sends the AS number of AS1 to AS4. In the point-to-point manner of advertising the hidden AS, deployment is easy and security is high. In the hop-by-hop manner of advertising the hidden AS, there are a small quantity of connections that need to be established by an AS. For example, in a relatively sparse deployment scenario (for example, there are a relatively small quantity of ASs in a network), the point-to-point manner of advertising the hidden AS is used. In a relatively dense deployment scenario (for example, there are a relatively large quantity of ASs in a network), the hop-by-hop manner of advertising the hidden AS is used.

In some implementations, the AS sends, to all valid neighbors of the AS at least once, an identifier of an AS that can be sensed by the AS.

A destination (a receiver identified by the AS or a valid neighbor of the AS) that advertises the hidden AS is, for example, an AS whose relationship with the AS meets a business relationship requirement. For example, the AS and the AS that is used as the destination of the hidden AS have a customer to provider (customer to provider, C2P) relationship or a peer to peer (peer to peer, P2P) relationship. An identifier of an AS that can be sensed by the AS is, for example, an AS identifier of a customer AS of the AS.

For example, the AS advertises, to a provider AS and/or a peer AS of the AS, an AS identifier of at least one customer AS that can be sensed by the AS. For example, in the scenario shown in FIG. 10, any downstream AS of AS4, for example, AS2, detects an AS identifier of a customer AS that can be sensed by AS2, to obtain the identifier of AS1, and AS2 advertises the identifier of AS1 to the upstream AS4 of AS2. Alternatively, the source AS advertises the AS identifier of the AS to the validation AS. For example, AS1 advertises the identifier of AS1 to AS4. The validation AS can receive the AS identifier of the source AS from a customer AS of the validation AS or a peer AS of the validation AS. Because the customer AS is advertised, the validation AS can generate a more accurate prefix allowlist. Specifically, an example in which the prefix allowlist is generated by using the EFP-uRPF algorithm A is used. When step 1 is performed, if the validation AS does not receive an AS identifier of a customer AS, when step 2 is performed, the validation AS does not use the AS identifier of the customer AS as an index to search the Adj-RIBs-In base, and does not add an origin prefix from the customer AS to the prefix allowlist. In this case, the prefix allowlist is incomplete because the origin prefix from the customer AS is lacking. As a result, the prefix allowlist is inaccurate. After the customer AS is advertised, after receiving the identifier of the customer AS through an incoming interface of the validation AS, the validation AS can learn that traffic corresponding to the origin prefix of the customer AS may subsequently reach the incoming interface. In this case, when step 2 is performed, the validation AS can add the origin prefix of the customer AS to the prefix allowlist. In this way, a problem of inaccuracy of the prefix allowlist due to a lack of the origin prefix of the customer AS in the customer cone is resolved.

In some implementations, the hidden AS (a to-be-sent identifier of an AS) is determined based on an AS_path attribute. For example, the network device B records an AS_path attribute sent by the network device B to the AS C in a historical time period. If the AS_path attribute does not include an identifier that is of an AS and that has been obtained by the network device B, the network device B determines that the identifier of the AS is a hidden AS. Therefore, the network device B further sends the identifier of the AS to the AS C. For example, the network device B obtains a first AS path received by the network device B from the AS A and a second AS path sent by the network device B to the AS C, and the network device B compares content of the first AS path with content of the second AS path. If the network device B determines that an identifier of the AS A exists in the first AS path and the identifier of the AS A does not exist in the second AS path, it indicates that the identifier that is of the AS A and that is advertised to an upstream AS is lacking. Therefore, that the network device B sends the identifier of the AS A to the AS C is equivalent to resending the identifier of the AS A, so that the AS C can sense existence of the AS A.

For example, in the scenario shown in FIG. 10, a network device in AS2 detects that the AS number of AS1 never appears in an AS_path attribute advertised by the network device to AS4. In this case, the network device actively advertises the AS number of AS1 to AS4, so that AS4 can sense the existence of AS1 based on the received AS number of AS1. In this way, the prefix P1, the prefix P2, and the prefix P3 originating from AS1 are all added to the prefix allowlist on the interface A. In a specific example of determining the hidden AS, the network device in AS2 compares an AS_path attribute received by the network device from AS1 with the AS_path attribute advertised by the network device to AS4. The network device detects, based on a case that the AS number of fAS1 exists in the received AS_path attribute and that the AS number of AS 1 does not exist in the AS_path attribute advertised to AS4, that AS1 is the hidden AS.

In some implementations, the network device sends the AS identifier of the hidden AS to the validation AS, and also sends an attribute of the hidden AS to the validation AS. The attribute of the hidden AS includes a parameter in another dimension other than the AS identifier. The following uses an example to describe the following: The attribute of the hidden AS is optionally further advertised by the network device.

For example, the network device further sends, to the validation AS, a source of the AS identifier of the hidden AS. For example, the source of the AS identifier is a customer AS.

For example, the network device further sends, to the validation AS, a destination of the AS identifier of the hidden AS. The destination of the AS identifier of the hidden AS is, for example, a provider AS or a peer AS.

For example, the network device further sends a reason type to the validation AS. The reason type indicates a reason why the AS is hidden. In other words, the reason type indicates a reason why the network device does not send the AS identifier of the hidden AS to the validation AS in a historical time period. For example, the reason type is a no-export attribute, and the reason type indicates that the AS is hidden because the hidden AS sends the no-export attribute. For example, because the hidden AS sends routing information and the no-export attribute together to the network device, the network device does not advertise the hidden AS to the validation AS before because the network device identifies the no-export attribute. For another example, the reason type is a policy locally configured by the network device.

For example, the network device further sends a connection relationship flag to the validation AS. The connection relationship flag indicates a connection relationship between the hidden AS and an AS in which the network device is located. For example, the connection relationship flag is a direct connection flag or an indirect connection flag. The direct connection flag indicates that the hidden AS has a direct connection relationship with the AS in which the network device is located. The indirect connection flag indicates that the hidden AS has an indirect connection relationship with the AS in which the network device is located. For example, in the scenario shown in FIG. 10, the network device in AS2 determines a connection relationship between AS2 and AS1. If AS2 has a direct connection relationship with AS1, the network device further advertises a direct connection flag when advertising the AS number of AS1 to AS4. If AS2 has an indirect connection relationship with AS1, the network device further advertises an indirect connection flag when advertising the AS number of AS1 to AS4.

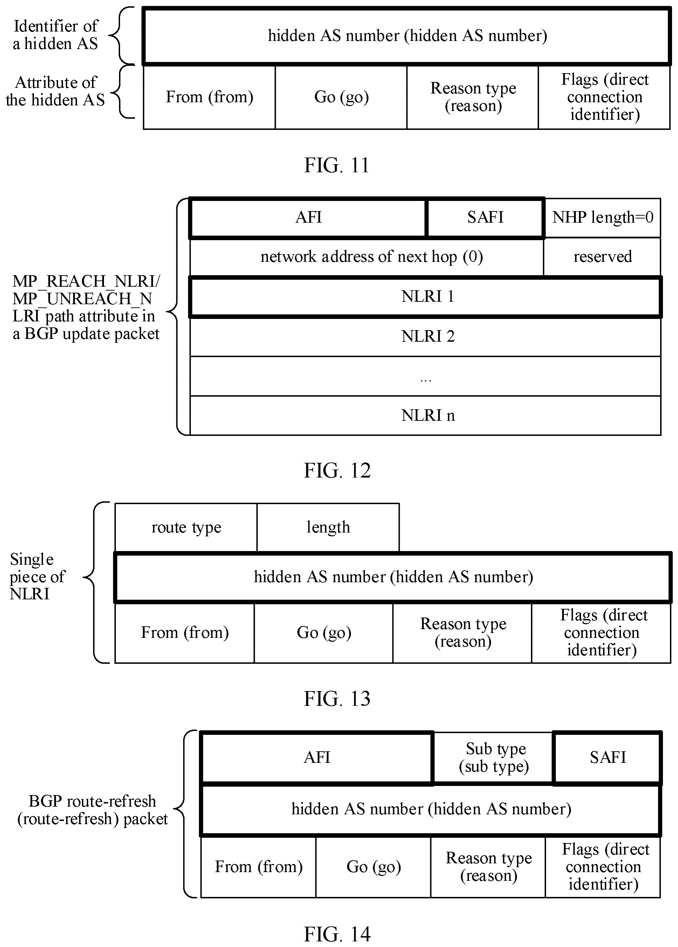

For example, FIG. 11 is a diagram of a structure of a packet. The structure of the packet shown in FIG. 11 is applicable to advertising a hidden AS. The structure of the packet shown in FIG. 11 is, for example, a part of content in a BGP protocol packet. The packet includes a hidden AS number field (hidden AS number field), a from (from) field, a go (go) field, a reason (reason) field, and a flags (flags) field. The hidden AS number field is used to carry the AS identifier of the hidden AS. The from field is used to carry a direction from which the AS identifier of the hidden AS comes, for example, a source of the AS identifier of the hidden AS. For example, the from field carries a customer AS. The go field is used to carry a direction to which the AS identifier of the hidden AS is sent, for example, the destination of the AS identifier of the hidden AS. For example, the go field carries a provider AS, a peer AS, or the like. The reason field is used to carry a type of the reason why the AS is hidden. A most significant bit in the flags field is a connection relationship flag, and the most significant bit in the flags field indicates whether the hidden AS is a directly connected AS or an indirectly connected AS. Another bit except the most significant bit in the flags field is reserved. For example, the hidden AS number field occupies four bytes, and the from field, the go field, the reason field, and the flags field each occupy one byte.

In some implementations, the validation AS visualizes a routing topology based on the attribute of the hidden AS. For example, the validation AS generates a topology of the customer cone of the validation AS based on the identifier of the hidden AS, and the validation AS marks the attribute of the hidden AS to the topology of the customer cone. For example, the validation AS determines a path between the validation AS and the hidden AS based on the source that is of the AS identifier and that is carried in the from field and the connection relationship flag carried in the flags field, and the validation AS adds the path between the validation AS and the hidden AS to the routing topology. For example, the AS C receives the identifier of the AS A, the source of the AS identifier, and the connection relationship flag from the AS B, and the source of the AS identifier is the customer AS. Therefore, the AS C determines that the AS A is a customer AS of the AS B, and the AS C adds the AS A as a downstream AS of the AS B in the topology of the customer cone. If the connection relationship flag is a direct connection flag, the AS C adds a direct link between the AS B and the AS A in the topology of the customer cone. If the connection relationship flag is an indirect connection flag, the AS C adds an indirect link between the AS B and the AS A in the topology of the customer cone.

For example, in the scenario shown in FIG. 10, when AS2 advertises the identifier of AS1 to AS4, AS2 further advertises, to AS4, an interface that is on AS2 and that is connected to AS1 and a direct connection flag, where the direct connection flag indicates that AS2 has a direct connection relationship with AS1. When AS4 constructs the topology of the customer cone, AS4 adds a direct link to the interface of AS2 in the topology based on the identifier of AS1, the interface that is on AS2 and that is connected to AS4, and the direct connection flag, and marks an endpoint of the direct link as AS1 to the topology.

There are a plurality of manners for advertising the hidden AS. The following uses three advertising manners as examples for description.

Manner 1 for advertising the hidden AS: A path attribute (path attribute) in a BGP update (update) packet is extended to carry the AS identifier of the hidden AS.

In some implementations, the path attribute in the BGP update packet generated and sent by the network device carries the AS identifier of the hidden AS and the attribute of the hidden AS. For example, the BGP update packet includes the path attribute, the path attribute includes an attribute type field, an attribute length field, and an attribute value field, and the attribute value field includes the AS identifier of the hidden AS and the attribute of the hidden AS. One path attribute field includes one or more NLRI fields. When one path attribute field includes a plurality of NLRI fields, each NLRI field is used to carry an AS identifier of one hidden AS and an attribute of the hidden AS, and different NLRI fields are used to carry AS identifiers and attributes of different hidden ASs. Because a same BGP update packet carries identifiers and attributes of a plurality of hidden ASs, efficiency of advertising the plurality of hidden ASs is improved.

In some implementations, an extended multi-protocol reachable network layer routing information (multi-protocol reachable NLRI, MP_REACH_NLRI) and/or multi-protocol unreachable network layer routing information (multi-protocol unreachable NLRI, MP_UNREACH _NLRI) carries the AS identifier of the hidden AS and the attribute of the hidden AS. For example, the BGP update packet generated and sent by the network device includes MP_REACH_NLRI, and MP_REACH_NLRI includes an AFI (address family identifier, address family identifier), a SAFI (subsequent address family identifier, subsequent address family identifier), the AS identifier of the hidden AS, and the attribute of the hidden AS. The address family identifier or the subsequent address family identifier indicates to generate a validation entry and/or advertise the hidden AS. MP_REACH_NLRI is used to advertise the hidden AS. The AS identifier of the hidden AS and the attribute of the hidden AS are both encapsulated in an inner layer of the AFI and the SAFI. Optionally, a sub type is further defined to indicate source address validation and/or an advertisement of the hidden AS.

Alternatively, the BGP update packet generated and sent by the network device includes MP_UNREACH_NLRI, and MP_UNREACH_ NLRI includes an address family identifier, a subsequent address family identifier, the AS identifier of the hidden AS, and the attribute of the hidden AS. MP_UNREACH_ NLRI identifies that an advertisement of the hidden AS is withdrawn.

In Implementation 1, when the hidden AS is advertised to the validation AS, because a predetermined address family or subsequent address family indicates to generate a validation entry and/or advertise the hidden AS, a network device in the validation AS serving as a receiver can determine that an AS identifier carried in a received packet indicates to generate the validation entry, and does not need to use the AS identifier to perform path selection, so that a function of advertising the hidden AS is well isolated from another function like route selection. In addition, because the hidden AS is advertised by using the BGP update packet, an incremental update mechanism in the BGP protocol can be used. Only a changed hidden AS is advertised. When a new hidden AS is detected, an AS identifier of the new hidden AS is sent to the validation AS once, and it is unnecessary to send all detected hidden ASs. When a hidden AS disappears and is no longer valid, the hidden AS can be quickly withdrawn by sending MP_UNREACH_NLRI. Therefore, efficiency of updating the hidden AS is high, a probability of a useless advertisement is reduced.

For example, FIG. 12 is a diagram of a format of MP_REACH_NLRI in a BGP update packet according to an embodiment of this application. MP_REACH_NLRI includes an AFI field, a SAFI field, a length of next hop network address (length of next hop network address, NHP length) field, a network address of next hop (network address of next hop) field, and one or more network layer routing information (network layer reachability information, NLRI) fields. If a value of the length of next hop network address field is 0, it indicates that the network address of next hop field does not exist. In other words, if a length of the network address of next hop field is 0, the network address of next hop field does not need to be packed or parsed.

For example, FIG. 13 is a diagram of a format of NLRI in FIG. 12. The NLRI includes a route type (route type) field, a length (length) field, and the hidden AS number field, the from field, the go field, the reason field, and the flags field that are shown in FIG. 11.

In some implementations, before the network device B advertises a hidden AS to the network device C, the network device B negotiates with the network device C about a capability of advertising the hidden AS. For example, the network device B generates and sends a BGP open (open) packet to the network device C, where the BGP open packet includes a capability identifier. The network device C receives the BGP open packet. If the network device C supports receiving an advertisement of the hidden AS, the network device C sends a BGP open acknowledgment packet to the network device B, where the BGP open acknowledgment packet includes a flag bit indicating that a capability of advertising the hidden AS is determined to be supported. The network device C receives the BGP open acknowledgment packet, and establishes a BGP peer relationship with the network device B based on that a capability of hiding the AS is determined to be supported by the peer end. Alternatively, if the network device C does not support receiving an advertisement of the hidden AS, the network device C sends a BGP open acknowledgment packet to the network device B, where the BGP open acknowledgment packet includes a flag bit indicating that a capability of advertising the hidden AS is not supported, and the network device C disconnects a BGP peer relationship with the network device B based on the BGP open acknowledgment packet.

The capability identifier indicates that the advertisement of the hidden AS is supported. For example, the capability identifier indicates that the NLRI is supported to carry the AS identifier of the hidden AS. Optionally, the capability identifier is an address family identifier or a subsequent address family identifier. For example, the BGP open packet includes an optional parameter field, the optional parameter field includes a capability (capability) field, and the capability (capability) field includes the capability identifier. The scenario shown in FIG. 10 is used as an example. The AS2 and AS4 negotiate to establish a BGP peer relationship based on a new capability, where the new capability is to carry a hidden AS in NLRI, and the new capability is identified by using a new address family or subsequent address family.

Manner 2 for advertising the hidden AS: A BGP route-refresh (route-refresh) packet is extended to carry the AS identifier of the hidden AS.

For example, the network device uses a point-to-point manner to send the BGP route-refresh packet, to advertise the AS identifier of the hidden AS and the AS attribute of the hidden AS. Optionally, the BGP route-refresh packet further includes an address family identifier or a subsequent address family identifier, and the address family identifier or the subsequent address family identifier indicates that the BGP route-refresh packet is used for source address validation and/or an advertisement of the hidden AS. The AS identifier of the hidden AS and the AS attribute of the hidden AS are encapsulated in an inner layer of the address family identifier or the subsequent address family identifier.

Optionally, the BGP route-refresh packet further includes a sub type (sub type) field, where the sub type field indicates that the BGP route-refresh packet is used for the source address validation or/and the advertisement of the hidden AS.

For example, FIG. 14 is a diagram of a format of a BGP route-refresh packet according to an embodiment of this application. The BGP route-refresh packet includes an AFI field, a SAFI field, a sub type field, and the hidden AS number field, the from field, the go field, the reason field, and the flags field that are shown in FIG. 11.

In Implementation 2, when the hidden AS is advertised to the validation AS, because a predetermined address family or subsequent address family indicates to generate a validation entry and/or advertise the hidden AS, a network device in the validation AS serving as a receiver can determine that an AS identifier carried in a received packet indicates to generate the validation entry, and does not need to use the AS identifier to perform path selection, so that a function of advertising the hidden AS is well isolated from another function like route selection. In addition, the BGP route-refresh packet is used to advertise the hidden AS. When a hidden AS disappears and is no longer valid, a speed of withdrawing the hidden AS is slow. Therefore, a probability of route flapping caused by quickly withdrawing the hidden AS is reduced and security is improved.

Manner 3 for advertising the hidden AS: The hidden AS (customer AS) is advertised along with a route.

In some implementations, the intermediate AS advertises existence of the source AS in a process of transferring a route from the source AS. In addition, in a process of transferring the route, the intermediate AS adds a flag to a packet that includes the route, to indicate that the identifier of the source AS does not participate in route selection but is used to generate a validation entry. For example, the intermediate AS adds a path attribute to the packet that includes the route, where the path attribute includes the foregoing flag.

For example, the network device A generates a packet A based on one or more address prefixes belonging to the AS A, and sends the packet A to the network device B. The packet A includes the one or more address prefixes of the AS A, a no-export attribute, and an AS path, where the AS path includes the identifier of the AS A. The packet A is equivalent to one or more routes. The network device B receives the packet A, and stores the one or more address prefixes and the AS path of the AS A in a routing table of the network device B. The network device adds a first flag to the packet A. Optionally, the network device further deletes the no-export attribute from the packet A, to obtain a packet B. The network device B sends the packet B to the network device C. The packet B includes the identifier of the AS A and the first flag, and optionally further includes the one or more address prefixes of the AS A. The network device C receives the packet B, and obtains the first flag and the identifier of the AS A that are carried in the packet B. The network device C determines, based on the identifier of the AS A, that the AS A exists in a customer cone of the AS C. The network device C determines, based on the first flag, that the address prefix of the AS A does not need to be used to determine a forwarding path, and generates a validation entry (for example, a prefix allowlist/SAV entry) by using the identifier of the AS A.

The first flag identifies that the identifier that is of the AS and that is carried in the packet does not participate in selection of the forwarding path. Alternatively, the first flag identifies that the identifier of the AS is used to generate the validation entry (for example, the SAV entry or the prefix allowlist). Alternatively, the first flag identifies existence of the advertised AS.

The scenario shown in FIG. 10 is used as an example. For example, AS1 generates and sends a packet A to AS2, where the packet A includes the address prefix P1 of AS1, the AS number of AS1, and the no-export attribute. The AS2 receives the packet A, AS2 adds a first flag to the packet A to obtain a packet B, and AS2 sends the packet B to AS4. The first flag indicates that the AS number of AS1 does not participate in route selection but is used to generate a source address validation rule. The AS4 receives the packet B, and AS4 obtains the first flag and the AS number of AS1 that are carried in the packet B. The AS4 determines, based on the AS number of AS1, that a customer cone of AS4 includes AS1, and AS4 adds the AS number of AS1 to the prefix allowlist based on the first flag.

In some other implementations, in a process of advertising a route by the source AS, the source AS adds a first flag and the no-export attribute to the route. The intermediate AS further forwards the route from the source AS to the validation AS. For example, AS1 generates and sends a protocol packet A to AS2, where the protocol packet A includes the address prefix P1 of AS1, the AS number of AS1, the first flag, and the no-export attribute. The AS2 obtains a protocol packet B based on the protocol packet A, and the protocol packet B includes the AS number of AS1 and the first flag. The AS2 sends the protocol packet B to AS4. Optionally, AS2 deletes the no-export attribute from the protocol packet A to obtain the protocol packet B.

Based on the foregoing method embodiment, embodiments of this application provide a validation information sending apparatus and a validation entry obtaining apparatus. The following provides descriptions with reference to the accompanying drawings.

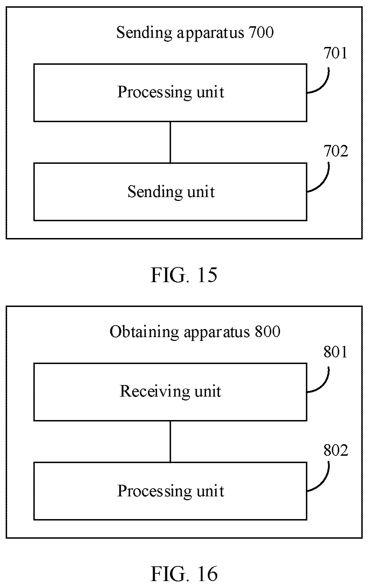

FIG. 15 is a diagram of a structure of a validation information sending apparatus 700 according to an embodiment of this application. The apparatus is used in a first network device, the apparatus may implement a function of the ASBR 1, the ASBR 2, or the ASBR 3 in the embodiment shown in FIG. 7, or the apparatus may implement a function of the controller C1 in the embodiment shown in FIG. 8. The apparatus 700 may include a processing unit 701 and a sending unit 702. The processing unit 701 may perform S301 in the foregoing method embodiment, and the sending unit 702 may perform S302 in the foregoing method embodiment.

Specifically, the processing unit 701 is configured to obtain validation information of a first autonomous system AS to which the processing unit belongs and a neighbor AS of a second AS used for validation, where the neighbor AS is a previous hop of the second AS in a direction from the first AS to the second AS.

The sending unit 702 is configured to send the validation information and the neighbor AS to the second AS.

In a possible implementation, the processing unit 701 is specifically configured to: obtain a first AS path with the first AS as an endpoint, where the first AS path includes the second AS; and obtain the neighbor AS of the second AS based on the first AS path.

In a possible implementation, the processing unit 701 is specifically configured to obtain a second AS path with the first AS as an endpoint, where the second AS path includes the second AS, and the second AS path is a standby path or a load balancing path of the first AS path.

In a possible implementation, the processing unit 701 is specifically configured to receive the neighbor AS that is of the second AS and that is sent by a boundary network device in the first AS, where the neighbor AS that is of the second AS and that is sent by the boundary network device in the first AS is an AS determined by the boundary network device in the first AS based on a routing table and/or a redirection path of the boundary network device.

In a possible implementation, the processing unit 701 is specifically configured to receive a first packet sent by the boundary network device in the first AS, where the first packet includes an identifier of the second AS and an identifier of the neighbor AS.

In a possible implementation, the first packet further includes a first sequence number and an identifier of the boundary network device in the first AS, and the processing unit 701 is further configured to: obtain a second sequence number based on the identifier of the boundary network device in the first AS and a first correspondence, where the first correspondence includes the identifier of the boundary network device in the first AS and the second sequence number; and determine that the first sequence number is greater than the second sequence number.

In a possible implementation, the processing unit 701 is specifically used by the first network device to obtain the neighbor AS of the second AS based on a routing table and/or a redirection path of the first network device.

In a possible implementation, the first network device is a controller, a route reflector RR, or a boundary network device.

In a possible implementation, the sending unit 702 is specifically configured to: obtain an address of a second network device in the second AS, where the second network device is a controller, an RR, or a boundary network device; and send the validation information and the neighbor AS to the second network device based on the address of the second network device.

In a possible implementation, the validation information includes an identifier of the first AS, and the sending unit is configured to send a second packet to the second network device, where the second packet includes the identifier of the first AS and the identifier of the neighbor AS.

In a possible implementation, the second packet further includes a third sequence number and an identifier of the first network device.

In a possible implementation, the sending unit 702 is further configured to send a packet to the second network device, where the packet includes an identifier of the first AS, the identifier of the second AS, and the identifier of the neighbor AS.

In a possible implementation, an origin AS identifier field in the packet includes the identifier of the first AS, a validation AS identifier field in the packet includes the identifier of the second AS, and a neighbor AS identifier field in the packet includes the identifier of the neighbor AS.

In a possible implementation, the processing unit 701 is further configured to obtain the identifier of the second AS and an address of a next hop, where the next hop is one of a controller in the second AS, a boundary network device in the second AS, or a route reflector in the second AS.

In a possible implementation, the validation information includes at least one of a source prefix corresponding to the first AS and the identifier of the first AS.

In this embodiment, for implementation of each unit, refer to a specific implementation process of the first network device in the foregoing method embodiment. Details are not described herein again.

FIG. 16 is a diagram of a structure of a validation entry obtaining apparatus 800 according to an embodiment of this application. The apparatus 800 is used in a second network device in a second AS used for validation, the apparatus 800 may implement a function of any device in the ASBR 4 to the ASABR 8 in the embodiment shown in FIG. 7, or the apparatus may implement a function of the controller C2 in the embodiment shown in FIG. 8. The apparatus 800 may include a receiving unit 801 and a processing unit 802. The receiving unit 801 is configured to receive the validation information and the neighbor AS that are sent by the first network device in S302. The processing unit 802 is configured to perform S303 in the foregoing method embodiment.

The receiving unit 801 is configured to receive the validation information of a first AS and the neighbor AS of a second AS that are sent by the first network device in the first AS.

The processing unit 802 is configured to obtain a validation entry based on the validation information and the neighbor AS, where the validation entry includes a source prefix corresponding to the first AS and an incoming interface for communication with the neighbor AS.

In a possible implementation, the validation information includes an identifier of the first AS, and the receiving unit 801 is used by the second network device to receive a second packet sent by the first network device in the first AS, where the second packet includes the identifier of the first AS and an identifier of the neighbor AS.

In a possible implementation, the second packet further includes a third sequence number and an identifier of the first network device, and the processing unit 802 is further configured to: obtain a fourth sequence number based on the identifier of the first AS, the identifier of the first network device, and a second correspondence, where the second correspondence includes the identifier of the first AS, the identifier of the first network device, and the fourth sequence number; and determine that the third sequence number is greater than the fourth sequence number.

In a possible implementation, the apparatus further includes a sending unit (not shown in FIG. 16). The sending unit is connected to the receiving unit, and is configured to send the validation information and the neighbor AS to a boundary network device in the second AS.

In a possible implementation, the validation information includes the source prefix, and the processing unit 802 is specifically configured to: obtain an AS to which a third network device communicating with an interface belongs; if the AS to which the third network device belongs is the neighbor AS, determine that the interface is the incoming interface; and obtain the validation entry based on the source prefix and the incoming interface.

In a possible implementation, the validation information includes the identifier of the first AS, and the processing unit 802 is specifically configured to: obtain the AS to which the third network device communicating with the interface belongs; if the AS to which the third network device belongs is the neighbor AS, determine that the interface is the incoming interface; obtain the source prefix based on the identifier of the first AS and a correspondence, where the correspondence includes the identifier of the first AS and the source prefix; and obtain the validation entry based on the source prefix and the incoming interface.

In a possible implementation, the receiving unit 801 is further configured to receive a service packet, where the service packet includes a source internet protocol IP address.

The processing unit 802 is further configured to determine validity of the service packet based on the validation entry, the source IP address, and an interface that receives the service packet.

In this embodiment, for implementation of each unit, refer to a specific implementation process of the second network device in the foregoing method embodiment. Details are not described herein again.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. For example, in the foregoing embodiment, the processing unit and the sending unit may be a same unit, or may be different units. The integrated unit may be implemented in a form of hardware, or may be implemented in a form of a software functional unit.

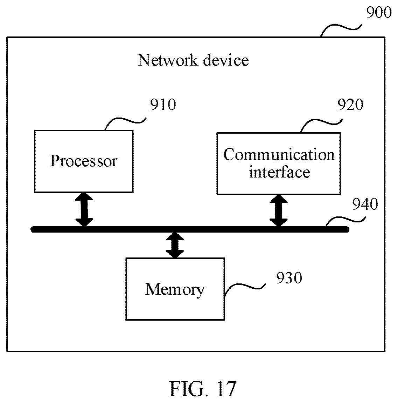

Hardware structures of the apparatus 700 and the apparatus 800 mentioned above may be a structure shown in FIG. 17. FIG. 17 is a diagram of a structure of a network device according to an embodiment of this application. The network device may be, for example, the first network device or the second network device in the foregoing method embodiment.

The network device 900 includes a processor 910, a communication interface 920, and a memory 930. There may be one or more processors 910 in the network device 900, and FIG. 17 shows one processor as an example. In this embodiment of this application, the processor 910, the communication interface 920, and the memory 930 may be connected through a bus system or in another manner. An example in which the processor 910, the communication interface 920, and the memory 930 are connected through the bus system 940 is used in FIG. 17.

The processor 910 may be a CPU, an NP, or a combination of a CPU and an NP. The processor 910 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The memory 930 may include a volatile memory (volatile memory), for example, a random access memory (random access memory, RAM). The memory 930 may alternatively include a non-volatile memory (non-volatile memory), for example, a flash memory (flash memory), a hard disk drive (hard disk drive, HDD), or a solid-state drive (solid-state drive, SSD). The memory 930 may alternatively include a combination of the foregoing types of memories. The memory 930 may store, for example, the validation entry mentioned above.

Optionally, the memory 930 stores an operating system and a program, an executable module, or a data structure, or a subset thereof or an extended set thereof. The program may include various operation instructions, and is used to implement various operations. The operating system may include various system programs, to implement various basic services and process a hardware-based task. The processor 910 may read the program in the memory 930, to implement the method provided in embodiments of this application.

The memory 930 may be a storage device in the communication device 900, or may be a storage apparatus independent of the communication device 900.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of representation, only one bold line is used to represent the bus in FIG. 17, but this does not mean that there is only one bus or only one type of bus.

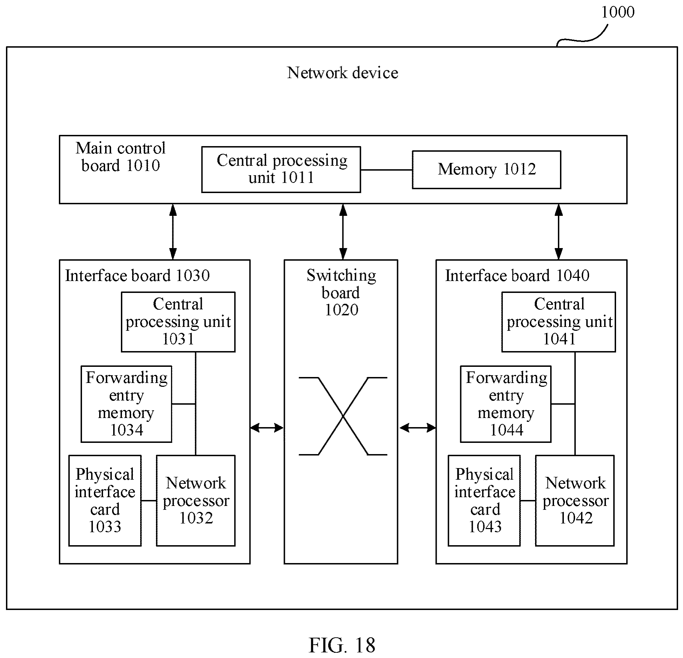

Hardware structures of the apparatus 700 and the apparatus 800 mentioned above may be a structure shown in FIG. 18. FIG. 18 is a diagram of a structure of a network device according to an embodiment of this application. The network device may be, for example, the first network device or the second network device in the foregoing method embodiment.

The network device 1000 includes a main control board 1010 and an interface board 1030.

The main control board 1010 is also referred to as a main processing unit (main processing unit, MPU) or a route processor card (route processor card). The main control board 1010 controls and manages components in the network device 1000, including functions such as routing calculation, device management, device maintenance, and protocol processing. The main control board 1010 includes a central processing unit 1011 and a memory 1012.

The interface board 1030 is also referred to as a line processing unit (line processing unit, LPU) card, a line card (line card), or a service board. The interface board 1030 is configured to: provide various service interfaces, and forward a data packet. The service interface includes but is not limited to an Ethernet interface and a POS (Packet over SONET/SDH) interface. The Ethernet interface is, for example, a flexible Ethernet service interface (Flexible Ethernet Clients, FlexE Clients). The interface board 1030 includes a central processing unit 1031, a network processor 1032, a forwarding entry memory 1034, and a physical interface card (physical interface card, PIC) 1033.

The central processing unit 1031 on the interface board 1030 is configured to: control and manage the interface board 1030, and communicate with the central processing unit 1011 on the main control board 1010.

The network processor 1032 is configured to forward a packet. A form of the network processor 1032 may be a forwarding chip. Specifically, processing of an uplink packet includes: processing an incoming interface of the packet, and searching a forwarding table. Processing of a downlink packet includes: searching a forwarding table, and the like.

The physical interface card 1033 is configured to implement a physical layer interconnection function. Original traffic enters the interface board 1030 from the physical interface card 1033, and a processed packet is sent out from the physical interface card 1033. The physical interface card 1033 includes at least one physical interface. The physical interface is also referred to as a physical port. The physical interface card 1033, also referred to as a subcard, may be mounted on the interface board 1030, and is responsible for converting an optical/electrical signal into a packet, performing validity check on the packet, and forwarding the packet to the network processor 1032 for processing. In some embodiments, the central processing unit 1031 on the interface board 1003 may also perform a function of the network processor 1032, for example, implement software forwarding based on a general-purpose CPU, so that the network processor 1032 is not required in the physical interface card 1033.

Optionally, the network device 1000 includes a plurality of interface boards. For example, the network device 1000 further includes an interface board 1040, and the interface board 1040 includes a central processing unit 1041, a network processor 1042, a forwarding entry memory 1044, and a physical interface card 1043.

Optionally, the network device 1000 further includes a switching board 1020. The switching board 1020 may also be referred to as a switch fabric unit (switch fabric unit, SFU). When the network device includes a plurality of interface boards 1030, the switching board 1020 is configured to complete data exchange between the interface boards. For example, the interface board 1030 and the interface board 1040 may communicate with each other via the switching board 1020.

The main control board 1010 is coupled to the interface board 1030. For example, the main control board 1010, the interface board 1030, the interface board 1040, and the switching board 1020 are connected to a system backboard through a system bus. In this way, interworking is implemented. In a possible implementation, an inter-process communication (inter-process communication, IPC) channel is established between the main control board 1010 and the interface board 1030, and the main control board 1010 communicates with the interface board 1030 through the IPC channel.

Logically, the network device 1000 includes a control plane and a forwarding plane. The control plane includes the main control board 1010 and the central processing unit 1031. The forwarding plane includes components that perform forwarding, such as the forwarding entry memory 1034, the physical interface card 1033, and the network processor 1032. The control plane performs functions of a router, generating a forwarding table, processing signaling and protocol packets, and configuring and maintaining a status of a device. The control plane delivers the generated forwarding table to the forwarding plane. On the forwarding plane, based on the forwarding table delivered from the control plane, the network processor 1032 searches the table, and forwards a packet received by the physical interface card 1033. The forwarding table delivered by the control plane may be stored in the forwarding entry memory 1034. In some embodiments, the control plane and the forwarding plane may be completely separated, and are not on a same device.

It should be understood that an operation on the interface board 1040 is consistent with an operation on the interface board 1030 in this embodiment of this application. For brevity, details are not described again. It should be understood that the network device 1000 in this embodiment may correspond to the first network device in the foregoing method embodiment. The main control board 1010, the interface board 1030, and/or the interface board 1040 in the network device 1000 may implement various steps in the foregoing method embodiment. For brevity, details are not described herein again.

It should be understood that, there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented via the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained by combining the two central processing units. This form of device (for example, a network device like a low-end switch or a router) has a weak data exchange and processing capability. A specific architecture that is to be used depends on a specific networking deployment scenario.

In some possible embodiments, the network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the network device. For example, the virtual machine may implement a network device based on a general-purpose physical server in combination with a network functions virtualization (network functions virtualization, NFV) technology. The network device is a virtual host, a virtual router, or a virtual switch. By reading this application, a person skilled in the art may obtain, on the general-purpose physical server through virtualization with reference to the NFV technology, the network device having the foregoing functions. Details are not described herein.

It should be understood that the network devices in the foregoing product forms have any function of the first network device or the second network device in the foregoing method embodiment. Details are not described herein.

An embodiment of this application further provides a chip, including a processor and an interface circuit. The interface circuit is configured to: receive instructions, and transmit the instructions to the processor. The processor may be, for example, a specific implementation form of the processing unit in the apparatus 800 shown in FIG. 16, and may be configured to perform the foregoing method. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processing circuit (digital signal processor, DSP), a microcontroller (micro controller unit, MCU), or a programmable controller (programmable logic device, PLD) or another integrated chip.

An embodiment of this application further provides a network device system, including a first network device and a second network device. The first network device performs a related method corresponding to S301 and S302 in the foregoing embodiment, and the second network device performs a related method corresponding to S303 in the foregoing embodiment.

An embodiment of this application further provides a computer-readable storage medium, including instructions or a computer program. When the instructions or the computer program is run on a computer, the computer is enabled to perform the method provided in the foregoing embodiments.

An embodiment of this application further provides a computer program product including instructions or a computer program. When the computer program product runs on a computer, the computer is enabled to perform the method in the foregoing embodiments.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, each unit may exist alone physically, or two or more units may be integrated into one unit. The integrated unit may be implemented in a form of hardware, or may be implemented in a form of a software service unit.

When the integrated unit is implemented in a form of the software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, the services described in this application may be implemented by hardware, software, firmware, or any combination thereof. When implemented by the software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

In the foregoing specific implementations, the objectives, technical solutions, and benefits of this application are further described in detail. It should be understood that the foregoing descriptions are merely specific implementations of this application.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A validation information sending method, wherein the method comprises:
obtaining, by a first network device, validation information of a first autonomous system AS to which the first network device belongs and a neighbor AS of a second AS used for validation, wherein the neighbor AS is a previous hop of the second AS in a direction from the first AS to the second AS; and
sending, by the first network device, the validation information and the neighbor AS to the second AS.

2. The method according to claim 1, wherein obtaining, by the first network device, the neighbor AS of the second AS used for validation comprises:
obtaining, by the first network device, a first AS path with the first AS as an endpo int, wherein the first AS path comprises the second AS; and
obtaining, by the first network device, the neighbor AS of the second AS based on the first AS path.

3. The method according to claim 2, wherein obtaining, by the first network device, the neighbor AS of the second AS used for validation comprises:
obtaining, by the first network device, a second AS path with the first AS as an endpoint, wherein the second AS path comprises the second AS, and the second AS path is a standby path or a load balancing path of the first AS path.

4. The method according to claim 1, wherein obtaining, by the first network device, the neighbor AS of the second AS used for validation comprises:
receiving, by the first network device, the neighbor AS that is of the second AS and that is sent by a boundary network device in the first AS, wherein the neighbor AS that is of the second AS and that is sent by the boundary network device in the first AS is an AS determined by the boundary network device in the first AS based on a routing table, a redirection path, or an AS topology base of the boundary network device, and the AS topology base comprises an identifier of an AS in a neighbor relationship.

5. The method according to claim 4, wherein receiving, by the first network device, the neighbor AS that is of the second AS and that is sent by the boundary network device in the first AS comprises:
receiving, by the first network device, a first packet sent by the boundary network device in the first AS, wherein the first packet comprises an identifier of the second AS and an identifier of the neighbor AS.

6. The method according to claim 5, wherein the first packet further comprises a first sequence number and an identifier of the boundary network device in the first AS, and before the sending, by the first network device, the validation information and the neighbor AS to the second AS, the method further comprises:
obtaining, by the first network device, the second sequence number based on the identifier of the boundary network device in the first AS and a first correspondence, wherein the first correspondence comprises the identifier of the boundary network device in the first AS and the second sequence number; and
determining, by the first network device, that the first sequence number is greater than the second sequence number.

7. The method according to claim 1, wherein obtaining, by the first network device, the neighbor AS corresponding to the second AS used for validation comprises:
obtaining, by the first network device, the neighbor AS of the second AS based on a routing table and/or a redirection path of the first network device.

8. The method according to any one of claims 1 to 7, wherein the first network device is a controller, a route reflector RR, or a boundary network device.

9. The method according to any one of claims 1 to 8, wherein sending, by the first network device, the validation information and the neighbor AS to the second AS comprises:
obtaining, by the first network device, an address of a second network device in the second AS, wherein the second network device is a controller, an RR, or a boundary network device; and
sending, by the first network device, the validation information and the neighbor AS to the second network device based on the address of the second network device.

10. The method according to claim 9, wherein the validation information comprises an identifier of the first AS, and the sending, by the first network device, the validation information and the neighbor AS to the second network device based on the address of the second network device comprises:
sending, by the first network device, a second packet to the second network device, wherein the second packet comprises the identifier of the first AS and the identifier of the neighbor AS.

11. The method according to claim 10, wherein the second packet further comprises a third sequence number and an identifier of the first network device.

12. The method according to claim 9, wherein the sending, by the first network device, the validation information and the neighbor AS to the second network device based on the address of the second network device comprises:
sending, by the first network device, a third packet to the second network device, wherein the third packet comprises an identifier of the first AS, the identifier of the second AS, and the identifier of the neighbor AS.

13. The method according to claim 12, wherein an origin AS identifier field in the third packet comprises the identifier of the first AS, a validation AS identifier field in the third packet comprises the identifier of the second AS, and a neighbor AS identifier field in the third packet comprises the identifier of the neighbor AS.

14. The method according to any one of claims 1 to 13, wherein the method further comprises:
obtaining, by the first network device, the identifier of the second AS and an address of a next hop, wherein the next hop is one of a controller in the second AS, a boundary network device in the second AS, or a route reflector in the second AS.

15. The method according to any one of claims 1 to 14, wherein the validation information comprises at least one of a source prefix corresponding to the first AS and the identifier of the first AS.

16. The method according to claim 1, wherein the method further comprises:
obtaining, by the first network device, an identifier of a third AS, wherein the third AS is a downstream AS of the first AS; and
sending, by the first network device, the identifier of the third AS to the target AS, wherein the target AS comprises the second AS and/or a neighbor AS of the first AS.

17. The method according to claim 16, wherein obtaining, by the first network device, the identifier of a third AS comprises:
obtaining, by the first network device, the identifier of the third AS based on a first AS set and a second AS set, wherein the first AS set comprises an identifier that is of an AS and that is historically received by the first network device and an identifier of the first AS, the second AS set comprises an identifier that is of an AS and that has been sent by the first network device to the target AS, the first AS set comprises the identifier of the third AS, and the second AS set does not comprise the identifier of the third AS.

18. The method according to claim 16 or 17, wherein sending, by the first network device, the identifier of the third AS to the target AS comprises:
obtaining, by the first network device, a fourth packet, and sending the fourth packet to the target AS, wherein the fourth packet comprises the identifier of the third AS and an attribute of the third AS, the attribute of the third AS comprises at least one of a source of the identifier of the third AS, a destination of the identifier of the third AS, a reason type, and a connection relationship flag, the reason type indicates a reason why the identifier of the third AS is not advertised in a historical time period, and the connection relationship flag indicates a connection relationship between the third AS and the first AS.

19. The method according to claim 18, wherein the fourth packet comprises a BGP undate packet, the BGP undate packet comprises a multi-protocol reachable network layer routing information MP_REACH_NLRI field, the MP_REACH_NLRI field comprises an address family identifier, a subsequent address family identifier, and a network layer routing information NLRI field, the address family identifier or the subsequent address family identifier indicates to generate a validation entry or advertise an AS, the NLRI field comprises the identifier of the third AS and the attribute of the third AS, and the NLRI field is encapsulated at an inner layer of the address family identifier or the subsequent address family identifier; or
the fourth packet comprises a BGP route-refresh packet, the BGP route-refresh packet comprises an address family identifier, a subsequent address family identifier, the identifier of the third AS, and the attribute of the third AS, and the address family identifier or the subsequent address family identifier indicates to generate a validation entry or advertise an AS.

20. A validation entry obtaining method, wherein the method comprises:
receiving, by a second network device in a second AS used for validation, validation information of a first AS and a neighbor AS of the second AS that are sent by a first network device in the first AS; and
obtaining, by the second network device, a first validation entry based on the validation information and the neighbor AS, wherein the first validation entry comprises a source prefix corresponding to the first AS and an incoming interface for communication with the neighbor AS.

21. The method according to claim 20, wherein the validation information comprises an identifier of the first AS, and receiving, by the second network device, the validation information of the first AS and the neighbor AS of the second AS that are sent by the first network device in the first AS comprises:
receiving, by the second network device, a second packet sent by the first network device in the first AS, wherein the second packet comprises the identifier of the first AS and an identifier of the neighbor AS.

22. The method according to claim 21, wherein the second packet further comprises a third sequence number and an identifier of the first network device, and before obtaining, by the second network device, the first validation entry based on the validation information and the neighbor AS, the method further comprises:
obtaining, by the second network device, a fourth sequence number based on the identifier of the first AS, the identifier of the first network device, and a second correspondence, wherein the second correspondence comprises the identifier of the first AS, the identifier of the first network device, and the fourth sequence number; and
determining, by the second network device, that the third sequence number is greater than the fourth sequence number.

23. The method according to claim 20, wherein the method further comprises:
sending, by the second network device, the validation information and the neighbor AS to a boundary network device in the second AS.

24. The method according to claim 20 or 23, wherein the validation information comprises the source prefix, and obtaining, by the second network device, the first validation entry based on the validation information and the neighbor AS comprises:
obtaining, by the second network device, an AS to which a third network device communicating with an interface belongs;
if the AS to which the third network device belongs is the neighbor AS, determining, by the second network device, that the interface is the incoming interface; and
obtaining, by the second network device, the first validation entry based on the source prefix and the incoming interface.

25. The method according to any one of claims 20 to 24, wherein the validation information comprises the identifier of the first AS, and obtaining, by the second network device, the first validation entry based on the validation information and the neighbor AS comprises:
obtaining, by the second network device, the AS to which the third network device communicating with the interface belongs;
if the AS to which the third network device belongs is the neighbor AS, determining, by the second network device, that the interface is the incoming interface;
obtaining, by the second network device, the source prefix based on the identifier of the first AS and a correspondence, wherein the correspondence comprises the identifier of the first AS and the source prefix; and
obtaining, by the second network device, the first validation entry based on the source prefix and the incoming interface.

26. The method according to any one of claims 20 to 25, wherein the method further comprises:
receiving, by the second network device, a service packet, wherein the service packet comprises a source internet protocol IP address; and
determining, by the second network device, validity of the service packet based on the first validation entry, the source IP address, and an interface that receives the service packet.

27. The method according to claim 20, wherein the method further comprises:
receiving, by the second network device, an identifier of a third AS from the first network device, wherein the third AS is a downstream AS of the first AS; and
obtaining, by the second network device, a second validation entry based on the identifier of the third AS, wherein the second validation entry comprises an address prefix corresponding to the third AS and an incoming interface of the second AS for communication with the third AS.

28. A validation information sending apparatus, wherein the apparatus is disposed in a first network device, and the apparatus comprises:
a processing unit, configured to obtain validation information of a first autonomous system AS to which the processing unit belongs and a neighbor AS of a second AS used for validation, wherein the neighbor AS is a previous hop of the second AS in a direction from the first AS to the second AS; and
a sending unit, configured to send the validation information and the neighbor AS to the second AS.

29. The apparatus according to claim 28, wherein the processing unit is specifically configured to:
obtain a first AS path with the first AS as an endpoint, wherein the first AS path comprises the second AS; and
obtain the neighbor AS of the second AS based on the first AS path.

30. The apparatus according to claim 29, wherein the processing unit is specifically configured to obtain a second AS path with the first AS as an endpoint, wherein the second AS path comprises the second AS, and the second AS path is a standby path or a load balancing path of the first AS path.

31. The apparatus according to claim 28, wherein the processing unit is specifically configured to receive the neighbor AS that is of the second AS and that is sent by a boundary network device in the first AS, wherein the neighbor AS that is of the second AS and that is sent by the boundary network device in the first AS is an AS determined by the boundary network device in the first AS based on a routing table and/or a redirection path of the boundary network device.

32. The apparatus according to claim 31, wherein the processing unit is specifically configured to receive a first packet sent by the boundary network device in the first AS, wherein the first packet comprises an identifier of the second AS and an identifier of the neighbor AS.

33. The apparatus according to claim 32, wherein the first packet further comprises a first sequence number and an identifier of the boundary network device in the first AS, and the processing unit is further configured to: obtain the second sequence number based on the identifier of the boundary network device in the first AS and a first correspondence, wherein the first correspondence comprises the identifier of the boundary network device in the first AS and the second sequence number; and determine that the first sequence number is greater than the second sequence number.

34. The apparatus according to claim 33, wherein the processing unit is specifically used by the first network device to obtain the neighbor AS of the second AS based on a routing table and/or a redirection path of the first network device.

35. The apparatus according to any one of claims 28 to 34, wherein the first network device is a controller, a route reflector RR, or a boundary network device.

36. The apparatus according to any one of claims 28 to 35, wherein the sending unit is specifically configured to:
obtain an address of a second network device in the second AS, wherein the second network device is a controller, an RR, or a boundary network device; and
send the validation information and the neighbor AS to the second network device based on the address of the second network device.

37. The apparatus according to claim 36, wherein the validation information comprises an identifier of the first AS, and the sending unit is configured to send a second packet to the second network device, wherein the second packet comprises the identifier of the first AS and the identifier of the neighbor AS.

38. The apparatus according to claim 37, wherein the second packet further comprises a third sequence number and an identifier of the first network device.

39. The apparatus according to claim 36, wherein the sending unit is further configured to send a third packet to the second network device, wherein the third packet comprises an identifier of the first AS, the identifier of the second AS, and the identifier of the neighbor AS.

40. The apparatus according to claim 39, wherein an origin AS identifier field in the third packet comprises the identifier of the first AS, a validation AS identifier field in the third packet comprises the identifier of the second AS, and a neighbor AS identifier field in the third packet comprises the identifier of the neighbor AS.

41. The apparatus according to any one of claims 28 to 40, wherein the processing unit is further configured to obtain the identifier of the second AS and an address of a next hop, wherein the next hop is one of a controller in the second AS, a boundary network device in the second AS, or a route reflector in the second AS.

42. The apparatus according to any one of claims 28 to 41, wherein the validation information comprises at least one of a source prefix corresponding to the first AS and the identifier of the first AS.

43. The apparatus according to claim 28, wherein the apparatus further comprises:
the processing unit is further configured to obtain an identifier of a third AS, wherein the third AS is a downstream AS of the first AS; and
the sending unit is further configured to send the identifier of the third AS to the target AS, wherein the target AS comprises the second AS and/or a neighbor AS of the first AS.

44. The apparatus according to claim 43, wherein the processing unit is configured to obtain the identifier of the third AS based on a first AS set and a second AS set, wherein the first AS set comprises an identifier that is of an AS and that is historically received by the first network device and an identifier of the first AS, the second AS set comprises an identifier that is of an AS and that has been sent by the first network device to the target AS, the first AS set comprises the identifier of the third AS, and the second AS set does not comprise the identifier of the third AS.

45. The apparatus according to claim 43 or 44, wherein the sending unit is configured to: obtain a fourth packet, and send the fourth packet to the target AS, wherein the fourth packet comprises the identifier of the third AS and an attribute of the third AS, the attribute of the third AS comprises at least one of a source of the identifier of the third AS, a destination of the identifier of the third AS, a reason type, and a connection relationship flag, the reason type indicates a reason why the identifier of the third AS is not advertised in a historical time period, and the connection relationship flag indicates a connection relationship between the third AS and the first AS.

46. The apparatus according to claim 45, wherein the fourth packet comprises a BGP undate packet, the BGP undate packet comprises a multi-protocol reachable network layer routing information MP_REACH_NLRI field, the MP_REACH_NLRI field comprises an address family identifier, a subsequent address family identifier, and a network layer routing information NLRI field, the address family identifier or the subsequent address family identifier indicates to generate a validation entry or advertise an AS, the NLRI field comprises the identifier of the third AS and the attribute of the third AS, and the NLRI field is encapsulated at an inner layer of the address family identifier or the subsequent address family identifier; or
the fourth packet comprises a BGP route-refresh packet, the BGP route-refresh packet comprises an address family identifier, a subsequent address family identifier, the identifier of the third AS, and the attribute of the third AS, and the address family identifier or the subsequent address family identifier indicates to generate a validation entry or advertise an AS.

47. A validation entry obtaining apparatus, wherein the apparatus is disposed in a second network device in a second AS used for validation, and the apparatus comprises:
a receiving unit, configured to receive validation information of a first AS and a neighbor AS of the second AS that are sent by a first network device in the first AS; and
a processing unit, configured to obtain a validation entry based on the validation information and the neighbor AS, wherein the validation entry comprises a source prefix corresponding to the first AS and an incoming interface for communication with the neighbor AS.

48. The apparatus according to claim 47, wherein the validation information comprises an identifier of the first AS, and the receiving unit is used by the second network device to receive a second packet sent by the first network device in the first AS, wherein the second packet comprises the identifier of the first AS and an identifier of the neighbor AS.

49. The apparatus according to claim 48, wherein the second packet further comprises a third sequence number and an identifier of the first network device, and the processing unit is further configured to: obtain a fourth sequence number based on the identifier of the first AS, the identifier of the first network device, and a second correspondence, wherein the second correspondence comprises the identifier of the first AS, the identifier of the first network device, and the fourth sequence number; and determine that the third sequence number is greater than the fourth sequence number.

50. The apparatus according to claim 47, wherein the apparatus further comprises:
a sending unit, configured to send the validation information and the neighbor AS to a boundary network device in the second AS.

51. The apparatus according to claim 47 or 50, wherein the validation information comprises the source prefix, and the processing unit is specifically configured to:
obtain an AS to which a third network device communicating with an interface belongs;
if the AS to which the third network device belongs is the neighbor AS, determine that the interface is the incoming interface; and
obtain the validation entry based on the source prefix and the incoming interface.

52. The apparatus according to any one of claims 47 to 51, wherein the validation information comprises the identifier of the first AS, and the processing unit is specifically configured to:
obtain the AS to which the third network device communicating with the interface belongs;
if the AS to which the third network device belongs is the neighbor AS, determine that the interface is the incoming interface;
obtain the source prefix based on the identifier of the first AS and a correspondence, wherein the correspondence comprises the identifier of the first AS and the source prefix; and
obtain the validation entry based on the source prefix and the incoming interface.

53. The apparatus according to any one of claims 47 to 52, wherein
the receiving unit is further configured to receive a service packet, wherein the service packet comprises a source internet protocol IP address; and
the processing unit is further configured to determine validity of the service packet based on the validation entry, the source IP address, and an interface that receives the service packet.

54. The apparatus according to claim 47, wherein
the receiving unit is further configured to receive an identifier of a third AS from the first network device, wherein the third AS is a downstream AS of the first AS; and
the processing unit is further configured to obtain a second validation entry based on the identifier of the third AS, wherein the second validation entry comprises an address prefix corresponding to the third AS and an incoming interface of the second AS for communication with the third AS.
